Europäisches Patentamt

European Patent Office

Office européen des brevets

Veröffentlichungsnummer: **0 281 682**

**A2**

# EUROPÄISCHE PATENTANMELDUNG

Anmeldenummer: 87118535.1

Int. Cl.⁴ **G06F 15/36**

Anmeldetag: **15.12.87**

Priorität: **25.02.87 DE 3705964**
**30.03.87 DE 3710559**
**24.04.87 DE 3713692**

Veröffentlichungstag der Anmeldung:
**14.09.88 Patentblatt 88/37**

Benannte Vertragsstaaten:
**AT BE CH DE ES FR GB GR IT LI LU NL SE**

Anmelder: **Liebel, Peter**
**Frankenstrasse 5**
**D-5000 Köln 40(DE)**

Erfinder: **Liebel, Peter**
**Frankenstrasse 5**
**D-5000 Köln 40(DE)**

Vertreter: **Leineweber, Jürgen**
**Nagelschmiedshütte 8**
**D-5000 Köln 40(DE)**

Verfahren zur Ermittlung von Hypothesen anhand stochastisch abhängiger und teilweiser unsicher bestimmter Merkmale.

Das Verfahren ermittelt für eine vorgegebene Menge von Merkmalen diejenige Hypothese, die diese Merkmalsmenge am wahrscheinlichsten verursacht hat.

Ausgehend von der Menge der zugelassenen Hypothesen wird jeder dieser Hypothesen eine charakterisierende Menge von Merkmalen zugeordnet, wobei zwei beliebige charakterisierende Merkmalsmengen im allgemeinen einen nichtleeren Durchschnitt besitzen. Die zugelassenen Hypothesen müssen sich nicht gegenseitig ausschließen , die Merkmale dürfen stochastisch abhähgig und unsicher bestimmt vorkommen.

Zur Berechnung der Wahrscheinlichkeit einer Hypothese wird der sogenannte L-Satz eingesetzt. Die hierfür erforderlichen Produkt-oder Verbund-Wahrscheinlichkeiten mmüssen aus genügend großen, repräsentativen Stichproben gewonnen werden. Zur Erleichterung dieser Aufgabe kann der L-Satz so umgeformt werden, daß im wesentlichen nur noch bedingte Wahrscheinlichkeiten benötigt werden.

Neben einer Fehlerrechnung bietet das Verfahren zusätzlich vor allem die Möglichkeit, fälschlicherweise festgestellte Merkmale oder merkmalsähnliche Beobachtungen, denen keine weitere Relevanz zukommt, aus der zur Begutachtung vorliegenden Merkmalsmenge auszuschließen.

Die endgültige Bestimmung der wahrscheinlichsten Hypothese wird durch eine graphische Darstellung ermöglicht, wobei die Hypothesen aufgrund ihres erreichten Wahrscheinlichkeitswerts und aufgrund ihres Abstands zueinander in eine Rangfolge gebracht werden.

EP 0 281 682 A2

## C) Verwendbarkeit der Erfindung

Die Erfindung ist dann zu verwenden, wenn aus einer Menge von Hypothesen anhand von Merkmalen die wahrscheinlichste Hypothese ermittelt werden soll. Hierbei sind nur wenige einschränkende Voraussetzungen zu fordern:

1) Es muß möglich sein, für die Ermittlung der benötigten relativen Häufigkeiten genügend große Stichproben zu erheben, um den Fehler dieser relativen Häufigkeiten klein halten zu können.

2) Aus dem gleichen Grund ist es erforderlich, daß der Anteil unsicher bestimmter Merkmale möglichst klein bleibt ( < 20 % ).

3) Bestehen zwei und mehr Hypothesen gleichzeitig, so wird angenommen, daß die jeweils verursachten Merkmalsmengen nur einen kleinen Durchschnitt besitzen, dessen Elemente für höchstens eine der gleichzeitig bestehenden Hypothesen deutlich aufwertend wirken.

Zwei Eigenschaften der Erfindung erweitern die Verwendbarkeit hingegen beträchtlich:

1) Es sind staochastisch abhängige Merkmale zugelassen.

2) Unter Inkaufnahme größerer Fehlerbereiche können Merkmale beliebiger Sicherheit berücksichtigt werden.

Es lassen sich mehrere Wissenbereiche benennen, in denen solche Probleme auftreten, wie etwa Medizin, Biologie, Technik, Geologie und Sportwissenschaft. In diesen Wissensbereichen sind dann eine Vielzahl von Aufgaben zu bewältigen, die im Prinzip eine Feststellung von Hypothesenwahrscheinlichkeiten aus vorgegebenen Merkmalen darstellen. Solche Aufgaben sind zum Beispiel:

-Ermittlung pathophysiologischer Zustände bei Menschen, Tieren und Pflanzen,

-Ermittlung von Fehlern bei elektrischen und elektronischen Geräten, Motoren, Triebwerken, industriellen Anlagen,

-hypothetische Bestimmung von geologischen Formationen anhand von Meßwerten und Beobachtungen,

-Eignungs-und Leistungsprognose bei beruflichen und sportlichen Betätigungen, usw.

## D) Stand der Technik und Vorteile des Verfahrens

1) Bestehende Konzeptionen benutzen Glg.1 und Glg.3, sowie aus diesen Gleichungen durch Ersetzungen der Form

$$h(E_Y...E_1) = h(E_Y \quad E_{Y-1}...E_1) \bullet h(E_{Y-1} \quad E_{Y-2}...E_1)^{\bullet} \vdots \; h(E_2 \quad E_1) \bullet h(E_1)$$

und

$$h(H_j E_Y...E_1) = h(E_Y \quad H_j E_{Y-1}...E_1) \bullet h(E_{Y-1} \quad H_j E_{Y-2}...E_1 \overset{\bullet}{...} \overset{\bullet}{...} h(E_2 \quad H_j E_1) \bullet h(E_1 \quad H_j) \bullet h(H_j)$$

hergeleitete Beziehungen.

### Verbesserung:

Verwendet man für Glg.1 und Glg.3 dagegen Ersetzungen der Form

$$h(E_Y ... E_1) = \sum_{\mu=1}^{J} h(E_Y...E_1 | H_\mu) \cdot h(H_\mu)$$

und

$$h(H_j E_Y...E_1) = h(E_Y...E_1 \quad H_j) \bullet h(H_j) \, ,$$

die zu Glg.2 und Glg.4 führen, so ergibt sich der Vorteil, daß man die schwierig zu erhebende Stichprobe der Gesamtpopulation vermeiden kann; man verwendet stattdessen einfacher zu verwirklichende Stichproben der Subpopulationen mit Eigenschaft $H_\mu$, $\mu = 1,...,J$, sowie eine knapp bemessene Stichprobe zur Bestimmung der $h(H_\mu)$.

2) Bisher wurden bedingte relative Häufigkeiten aus Stichproben gewonnen, deren Stichprobenausführungen jeweils eine sicher bestimmte Hypothese $H_j$, $j \in \{1....J\}$ enthalten, sowie sichere Angaben über das Vorliegen bzw. Nicht-Vorliegen von allen zu $H_j$ gehörenden Merkmalen.

Verbesserung:

Ein Vorteil des Verfahrens ist es, daß nun für alle Stichproben unsicher bestimmte Merkmale zugelassen sind.

Zu beachten ist, daß auch für solche Stichproben mit unsicher bedingten Merkmalen die Werte für $\Delta h(E_i)$ und $\Delta h(E_i$ $H_j)$, $E_i$ und $H_j$ beliebig, berechnet werden können.

3) Ersetzt man in Glg.3 die relativen Häufigkeiten von Ereignisprodukten nach dem Multiplikationssatz ( Vgl.Ziffer D)1) ) und berechnet den relativen Größtfehler der so entstandenen Beziehung, so muß beachtet werden, daß der errechnete Fehler schnell zu groß wird, wenn zur Vereinfachung die Beträge voneinander abhängiger, fehlerbehafteter Größen addiert werden.

Verbesserung:

Bei der Fehlerrechnung für Glg.4 wird berücksichtigt, daß nur die $\Delta(E_\lambda$ $H_\mu)$ und $\Delta h(H_\mu)$, $\lambda = 1....I$. $\mu = 1...,J$ voneinander unabhängige Einflußgrößen sind. Für diese Fehlerrechnung werden dann die Gleichungen 5a bis 13a zusammen mit bekannten Methoden der Fehlerrechnung eingesetzt.

4) Bisher werden Methoden für das Heraussortieren belastungsbedingter und/oder nur merkmalsähnlicher Elemente aus der zur Verarbeitung vorliegenden Merkmalsmenge nicht angeboten.

Verbesserung:

Das vorliegende Verfahren besitzt den Vorteil, daß aus VERMENG mit Hilfe definierter Bestimmungskriterien die gültige Teilmenge bestimmt werden kann. Außerdem kann anhand der erstellten Schaubilder unmittelbar überblickt werden, ob noch weitere Teilmengen aus VERMENG im Wettbewerb stehen, welche Zahlenwerte damit erreicht werden können und welche Maßnahmen zu ergreifen sind, um eine Entscheidung zu sichern oder eine andere Entscheidung herbeizuführen.

E) Darstellung der Lösung und Beispiele

Der Erfindung liegt folgendes Geräte-Schema zugrunde:

```
Gerät
┌─────────────────────────────────────────────────────────────┐
│                                                               │
│  Verfahrenssteuerung                                          │
│  ┌─────────────────────────────────────────────────────────┐ │
│  │                                                         │ │
│  │  Bauteil I      Bauteil II    Bauteil III   Bauteil IV  │ │
│  │                                                         │ │
│  │  Berechnung     Wissens-      Berechnung    Eliminierung│ │
│  │  der Hypo-      basis         der Fehler    verfälschen-│ │
│  │  thesenwahr-                  der Hypo-     der Merkmale │ │
│  │  scheinlich-                  thesenwahr-               │ │
│  │  keiten                       scheinlich-              │ │
│  │                               keiten                   │ │
│  └─────────────────────────────────────────────────────────┘ │
└─────────────────────────────────────────────────────────────┘
```

Die Darstellung des Verfahrens wird deshalb in vier Teile gegliedert:
I) Gleichungen
II) Aufbau und Verwendung der Dateien
III) Fehlerrechnung
IV) Eliminierung verfälschender Merkmale und Entscheidungsvorgang.

I) Gleichungen

Es stehen vier Gleichungen zur Verfügung:

$$h(H_j \mid E_\gamma \ldots E_1) = \frac{h(H_j \cdot E_\gamma \ldots E_1)}{h(E_\gamma \ldots E_1)} \quad,$$

(Glg.1),

$$h(H_j \mid E_\gamma \ldots E_1) = \frac{h(E_\gamma \ldots E_1 \mid H_j)}{\sum_\mu h(E_\gamma \ldots E_1 \mid H_\mu) \cdot h(H_\mu)} \cdot h(H_j) \quad,$$

(Glg.2),

$$h(H_j \mid E_\gamma \ldots E_{\chi+1} E'_\chi \ldots E'_1) = \frac{L_{E_\chi \ldots E_1} \left[ h(H_j \cdot E_\gamma \ldots E_{\chi+1} E_\chi \ldots E_1) \right]}{L_{E_\chi \ldots E_1} \left[ h(E_\gamma \ldots E_{\chi+1} E_\chi \ldots E_1) \right]},$$

(Glg.3),

$$p(H_j \mid E_\gamma \ldots E_{\chi+1} E'_\chi \ldots E'_1) =$$

$$\mathrm{Glg.2.14} \quad \frac{\displaystyle\sum_{\nu=0}^{\chi_{2}-1} \left[ p(REC_\nu \mid H_j) \cdot p(H_j) \cdot \overbrace{\frac{p(E_\chi \mid E'_\chi)}{\sum_\mu p(E_\chi \mid H_\mu) \cdot p(H_\mu)} \ldots \frac{p(E_1 \mid E'_1)}{\sum_\mu p(E_1 \mid H_\mu) \cdot p(H_\mu)}}^{(REC_\nu)} \right]}{\displaystyle\sum_{\nu=0}^{\chi_{2}-1} \left[ \left( \sum_\mu p(REC_\nu \mid H_\mu) \cdot p(H_\mu) \right) \cdot \overbrace{\frac{p(E_\chi \mid E'_\chi)}{\sum_\mu p(E_\chi \mid H_\mu) \cdot p(H_\mu)} \ldots \frac{p(E_1 \mid E'_1)}{\sum_\mu p(E_1 \mid H_\mu) \cdot p(H_\mu)}}^{(REC_\nu)} \right]} \cdot$$

(Glg.4),

Sind nur sicher bestimmte Merkmale zu verarbeiten, so können Glg.1 oder Glg.2, bei Merkmalen beliebiger Sicherheit können Glg.3 oder Glg.4 eingesetzt werden.

Bei Vorliegen einer Stichprobe der Gesamtpopulation werden Glg.1 oder Glg.3, bei Vorliegen von J Stichproben der Subpopulationen mit Eigenschaft $H_\mu$, $\mu = 1,\ldots,J$ werden Glg.2 oder Glg.4 verwendet.

Sind Stichproben der Subpopulation mit Eigenschaft $H_\mu$ gegeben, so sind zusätzlich für alle $\mu = 1,\ldots,J$ die Werte $h(H_\mu) \pm \Delta h(H_\mu)$ zur Verfügung zu stellen.

( Beweise bzw. Herleitungen für die Gleichungen 3 und 4 sind im Anhang 3 angegeben. )

II ) Aufbau und Verwendung der Dateien

Die Datei 1 wird so strukturiert. daß für jedes $H_\mu$, $\mu = 1....,J$ fünf Spalten mit folgendem Inhalt angelegt werden:

Spalte 1

Alle Elemente aus CHARMENG($H_i$) in der Reihenfolge ihrer $h(E,H_i)$-Werte.

Spalte 2

$$W(E_i) \quad \text{mit} \quad W(E_i) := \widetilde{h(E_i)} + \widetilde{\Delta h(E_i)} \ .$$

( Hierbei kennzeichnet das Zeichen ~, daß die Stichprobe einer Population entnommen wurde. die aus fehlerfrei funktionierenden Objekten bzw. Individuen besteht. )

Spalte 3

$h(E, \quad H_i) \pm \Delta h(E, \quad H_i)$ : die Berechnung der Werte erfolgt mit Hilfe des Materials von Datei 2.

Spalte 4

$h(E_i) \pm \Delta h(E_i)$ ; die Werte sind ebenfalls aus Datei 2 gewonnen.

Spalte 5

$$\frac{h(E_i|H_j)}{h(E_i)} ,$$

Quotient der Werte von Spalte 3 und Spalte 4

Beispiel:

| $E_i$ | $W(E_i)$ | $h(E_i|H_j) \pm \Delta h(E_i|H_j)$ | $h(E_i) \pm \Delta h(E_i)$ | $\dfrac{h(E_i|H_j)}{h(E_i)}$ |
|---|---|---|---|---|
| H1 | | | | |
| E1 | .15 | 1 | .74 + .10 | 1.35 |
| E3 | .10 | .83 + .10 | .53 + .15 | 1.57 |
| E2 | .23 | .83 + .10 | .60 + .05 | 1.38 |
| E6 | .10 | .17 + .05 | .27 + .10 | 0.63 |
| H2 | | | | |
| E5 | .05 | .75 + .20 | .20 + .10 | 3.75 |
| E3 | .10 | .75 + .05 | .53 + .10 | 1.42 |
| E6 | .10 | .50 + .20 | .27 + .05 | 1.85 |
| H3 | | | | |
| E1 | .15 | 1 | .74 + .10 | 1.35 |
| E2 | .23 | .80 + .10 | .60 + .10 | 1.33 |
| E7 | .05 | .20 + .05 | .067 + .01 | 2.99 |
| E6 | .10 | .20 + .05 | .27 + .05 | 0.75 |
| E4 | .05 | .20 + .10 | .067 + .01 | 2.99 |

Beispiel einer Datei 1 für drei zugelassene Hypothesen.

Die Datei 1 wird für mehrere Aufgaben verwendet:

1) Es sind die Werte $h(E_i) \pm \Delta h(E_i)$, sowie die Werte $h(E_i \quad H_j) \pm \Delta h(E_i \quad H_j)$ für alle zugelassenen Merkmale und alle zugelassenen Hypothesen gespeichert, auf die im Bedarfsfall direkt zugegriffen werden kann.

2) Die Datei 2 enthält CHARMENG(Hj) für alle zugelassenen Hypothesen, so daß bei der Erstellung der Datei 2 für ein beliebiges $H_i$ feststeht, für welche Merkmale das Zutreffen oder Nicht-Zutreffen festgestellt werden muß.

3) Bei der Beurteilung der zur Verarbeitung vorliegenden Merkmalsmenge interessiert unter anderem diejenige Teilmenge, deren Elemente für eine Hypothese Hj aufwetend wirken. Dies kann anhand der in Datei 1 eingetragenen

$$\frac{h(E_i|H_j)}{h(E_i)} \quad \text{Werte}$$

entschieden werden.

4) Die Datei 1 besitzt zudem einige Kontrollaufgaben.

-Es kann überprüft werden, ob für alle zugelassenen Hypothesen gilt:

CHARMENG($H_a$) = CHARMENG($H_b$)) $\Leftrightarrow$ ($H_a$ = $H_b$).

-Ein Merkmal wird aus der Menge der zugelassenen Merkmale entfernt, wenn es nicht in wenigstens einer charakteristischen Merkmalsmenge enthalten ist.

-Ebenso wird ein Merkmal $E_i$ gestrichen, falls es nicht mindestens ein $H_j$ gibt, so daß

$$\frac{h(E_i|H_j)}{h(E_i)} \cdot \left[ 1 - \left( \frac{\Delta h(E_i|H_j)}{h(E_i|H_j)} + \frac{\Delta h(E_i)}{h(E_i)} \right) \right] > 1 \quad \text{ist.}$$

(Das heißt, daß $E_i$ aus der zugelassenen Merkmalsmenge entfernt wird, wenn es nicht für mindestens ein $H_j$ aufwertend wirkt.)

Die Datei 2 besteht entweder aus einer Stichprobe der Gesamtpopulation oder aus J Stichproben der Subpopulationen mit Eigenschaft $H_u$, $\mu$ = 1...,J. Beide Möglichkeiten ergeben dieselbe Struktur:

-Die zu einer Hypothese $H_j$ gehörenden Ausführungen werden zu einem Block zusammengefügt.

-Ein $H_j$-Block enthält in der 1.Spalte die Elemente von CHARMENG($H_j$) in der Reihenfolge gemäß Datei 1.

-Alle weitere Spalten eines $H_j$-Blocks sind Ausführungen mit der Hypothese $H_j$, wobei für ein Merkmal $E_i$ aus CHARMENG($H_j$) die Werte h($E_i$   $E_i'$) angegeben werden.

<u>Beispiel:</u>

| | H1 | | | | | | | H2 | | | | | H3 | | | | |
|---|---|---|---|---|---|---|---|---|---|---|---|---|---|---|---|---|---|
| | 1 | 2 | 3 | 4 | 5 | 6 | | 7 | 8 | 9 | 10 | | 11 | 12 | 13 | 14 | 15 |
| E1 | .7 ±.1 | 1 | 1 | 1 | 1 | .7 ±.3 | E5 | 1 | 1 | 1 | 0 | E1 | .9 ±.1 | 1 | 1 | 1 | 1 |
| E3 | .8 ±.2 | 1 | 1 | .8 ±.1 | 1 | .1 ±.1 | E3 | .9 ±.1 | 1 | .2 ±.1 | 1 | E2 | 1 | 1 | 1 | 1 | 0 |
| E2 | 1 | 1 | 1 | 1 | 0 | 1 | E6 | 1 | 1 | 0 | 0 | E7 | 1 | 1 | 1 | 1 | .9 ±.1 |
| E6 | 0 | 1 | 0 | 0 | 0 | 0 | | | | | | E6 | 1 | 0 | 0 | 0 | 0 |
| | | | | | | | | | | | | E4 | .1 ±.1 | 1 | 0 | 0 | 0 |

Beispiel einer Datei 2.
Die Datei enthält 15 Ausführungen einer Stichprobe der Gesamtpopulation. Für ein Merkmal $E_i$ ist der Wert h($E_i|E_i'$) $\pm \Delta$h($E_i|E_i'$) eingetragen.

Zusatzbemerkungen:

1. In der Menge der zugelasssenen Hypothesen $H_{\mu}$, $\mu = 1 \ldots J$ hat die J-te Hypothese eine Sonderstellung. Dieser Hypothese $H_J$ werden alle Stickprobenausführungen zugeordnet. die keine eindeutig festgelegte Diagnose besitzen. Als charakteristische Merkmalsmenge für $H_J$ wird die Menge aller zugelassenen Merkmale eingesetzt.

Nicht untersuchte Merkmale $E_i$ bei unklarer Diagnose erhalten den Wert

$$\widetilde{h(E_i)} + \Delta\widetilde{h(E_i)}$$

. Hierbei wird angenommen. daß bei Unklarheit eine umfangreiche Merkmalsuche ausgelöst wird. so daß in weitem Umfeld alle in Frage kommenden Merkmale untersucht sind.

2. Ist für eine Ausführung eine Hypothese festgelegt. so gilt für die Wahrscheinlichkeit des Zutreffens der angegebenen Hypothese $p = 1$. Eine solche Annahme ist vernünftig. da in vielen Wissensbereichen umfangreiche Maßnahmen zur Diagnosesicherung eingesetzt werden können.

Die Aufgabe der Datei 2 ist es, für Größen der Form $h(E_k \ldots E_i)$, $h(H_j E_k \ldots E_i)$, $h(E_k \ldots E_i \mid H_j)$, $\Delta h(E_i)$ und $\Delta h(E_i \mid H_j)$ die Werte zu liefern. Hierzu werden die benötigten Formeln zusammengestellt.

Es sei:

$\xi$ der Index für die $\xi$-te Stichprobenausführung,

$h(E_i \mid E_i')_\xi$ die Sicherheit für das Vorliegen des Merkmals $E_i$ für die $\xi$-te Stichprobenausführung,

$h(E_k \ldots E_i)_\xi$ die Sicherheit für das Vorliegen des Merkmalsprodukts $(E_k \ldots E_i)$ für die $\xi$-te Stichprobenausführung,

$h(E_k \ldots E_i)$ die relative Häufigkeit der Eigenschaft $(E_k \ldots E_i)$ für die betreffende Stichprobe,

$n$ der Umfang der Stichprobe für die Gesamtpopulation,

$n(H_j)$ die Anzahl der Stichprobenausführungen mit der Eigenschaft $H_j$.

Dann gilt:

$$h(E_i \mid E_i')_\xi := \begin{cases} h(E_i \mid E_i')_\xi, & \text{falls } E_i \text{ untersuchtes Merkmal ist} \\ \widetilde{h(E_i)} & \text{sonst.} \end{cases}$$

$$\Delta h(E_i \mid E_i')_\xi := \begin{cases} \Delta h(E_i \mid E_i')_\xi, & \text{falls } E_i \text{ untersuchtes Merkmal ist} \\ \Delta\widetilde{h(E_i)} & \text{sonst.} \end{cases}$$

$$h(E_k \ldots E_1)_\xi = \prod_{\lambda=1}^{k} h(E_\lambda \mid E_\lambda')_\xi \ .$$

$$h(H_j E_k \ldots E_1)_\xi := \begin{cases} \prod_{\lambda=1}^{k} h(E_\lambda | E'_\lambda)_\xi, & \text{falls die Ausführung } \xi \text{ } H_j \\ & \text{besitzt} \\ 0 & \text{sonst.} \end{cases}$$

$$h(E_k \ldots E_1) = \frac{1}{n} \cdot \sum_{\xi=1}^{n} h(E_k \ldots E_1)_\xi .$$

$$h(H_j E_k \ldots E_1) = \frac{1}{n} \cdot \sum_{\xi=1}^{n} h(H_j E_k \ldots E_1)_\xi .$$

$$h(E_k \ldots E_1 | H_j) = \frac{1}{n(H_j)} \cdot \sum_{\xi=1}^{n(H_j)} h(H_j E_k \ldots E_1)_\xi .$$

$$\Delta h_u(E_i) \approx \frac{1}{n} \cdot \sqrt{\sum_\xi \left[ \Delta h(E_i | E'_i)_\xi \right]^2} .$$

$$\Delta h_u(E_i | H_j) \approx \frac{1}{n(H_j)} \cdot \sqrt{\sum_\xi \left[ \Delta h(E_i | E'_i)_\xi \right]^2} , \quad \text{die Ausführung } \xi \text{ besitzt Hypothese } H_j .$$

$$\Delta h_B(E_i) \approx \sqrt{\frac{1}{n} \cdot h(E_i) \cdot \left[ 1 - h(E_i) \right]} .$$

$$\Delta h_B(E_i | H_j) \approx \sqrt{\frac{1}{n(H_j)} \cdot h(E_i | H_j) \cdot \left[ 1 - h(E_i | H_j) \right]} .$$

$$\Delta h(E_i) \approx \sqrt{\left[ \Delta h_u(E_i) \right]^2 + \left[ \Delta h_B(E_i) \right]^2} .$$

$$\Delta h(E_i | H_j) \approx \sqrt{\left[ \Delta h_u(E_i | H_j) \right]^2 + \left[ \Delta h_B(E_i | H_j) \right]^2} .$$

Mit den Werten der Datei 2 wird für alle Größen, die aus der Datei 2 gewonnen werden müssen, ein Berechnungsbeispiel angegeben. Hierzu seien zusätzlich folgende Werte gegeben.

$$\widetilde{h(E1)} := 0.1 \quad ; \quad \widetilde{\Delta h(E1)} := 0.05 \quad ;$$

$$\widetilde{h(E3)} := 0.05 \quad ; \quad \widetilde{\Delta h(E3)} := 0.05 \quad .$$

1. Ermittlung von Werten der Form $h(H_i E_\kappa..E.)$.

Es wird als Beispiel $h(H1\ E3\ E1)$ bestimmt.

$$h(H1\ E3\ E1) = \frac{1}{n} \cdot \sum_{\xi=1}^{15} h(H1\ E3\ E1)_\xi$$

$$= \frac{1}{n} \cdot \sum_{\xi=1}^{6} h(E3|E3')_\xi \cdot h(E1|E1')_\xi$$

$$= \frac{0.8 \cdot 0.7 + 1 \cdot 1 + 1 \cdot 1 + 0.8 \cdot 1 + 1 \cdot 1 + 0.1 \cdot 0.7}{15}$$

$$= \frac{4.43}{15} \approx 0.30\ .$$

2. Ermittlung von Werten der Form $h(E_\kappa..E.)$.

Bestimmt wird $h(E3\ E1)$.

$$h(E3\ E1) = \frac{1}{n} \cdot \sum_{\xi=1}^{15} h(E3\ E1)_\xi$$

$$= \frac{1}{n} \cdot \sum_{\xi=1}^{15} h(E3|E3')_\xi \cdot h(E1|E1')_\xi$$

$$= \frac{1}{15} \cdot \left[ 4.43 + \sum_{\xi=7}^{10} h(E3|E3')_\xi \cdot \widetilde{h(E1)} + \sum_{\xi=11}^{15} \widetilde{h(E3)} \cdot h(E1|E1')_\xi \right]$$

$$= \frac{1}{15} \cdot \left[ 4.43 + 0.9 \cdot 0.1 + 1 \cdot 0.1 + 0.2 \cdot 0.1 + 1 \cdot 0.1 \right.$$
$$\left. + 0.9 \cdot 0.05 + 1 \cdot 0.05 + 1 \cdot 0.05 + 1 \cdot 0.05 + 1 \cdot 0.05 \right]$$

$$= \frac{4.43 + 0.31 + 0.245}{15} = \frac{4.985}{15} \approx 0.33\ .$$

### 3. Ermittlung von Werten der Form $h(E_i) \pm \Delta h(E_i)$.

Es wird $h(E3) \pm \Delta h(E3)$ berechnet.

$$h(E3) = \frac{1}{n} \cdot \sum_{\xi=1}^{15} h(E3)_\xi$$

$$= \frac{1}{n} \cdot \sum_{\xi=1}^{15} h(E3 \mid E3')_\xi$$

$$= \frac{1}{n} \cdot \left[ \sum_{\xi=1}^{10} h(E3 \mid E3')_\xi + \sum_{\xi=11}^{15} \widetilde{h(E3)} \right]$$

$$= \frac{0.8 + 1 + 1 + 0.8 + 1 + 0.1 + 0.9 + 1 + 0.2 + 1 + 5 \cdot 0.05}{15}$$

$$= \frac{8.05}{15} \approx 0.54 .$$

$$\left[ \Delta h_u (E3) \right]^2 \approx \frac{1}{n^2} \cdot \sum_{\xi=1}^{15} \left[ \Delta h(E3 \mid E3')_\xi \right]^2$$

$$= \frac{1}{n^2} \cdot \left[ \sum_{\xi=1}^{10} \left[ \Delta h(E3 \mid E3')_\xi \right]^2 + \sum_{\xi=11}^{15} \left[ \Delta \widetilde{h(E3)} \right]^2 \right]$$

$$= \frac{0.2^2 + 0 + 0 + 0.1^2 + 0 + 0.1^2 + 0.1^2 + 0 + 0.1^2 + 0 + 5 \cdot 0.05^2}{225}$$

$$= \frac{0.0925}{225} \approx 0.0004 .$$

$$\left[ \Delta h_B (E3) \right]^2 \approx \frac{1}{n} \cdot h(E3) \cdot \left[ 1 - h(E3) \right]$$

$$= \frac{1}{15} \cdot 0.54 \cdot (1 - 0.54) \approx 0.0166 .$$

Damit ergibt sich:

$$\Delta h(E3) \approx \sqrt{\left[\Delta h_{u}(E3)\right]^2 + \left[\Delta h_{B}(E3)\right]^2}$$

$$= \sqrt{0.0004 + 0.0166} \approx 0.13$$

4. Ermittlung von Werten der Form $h(E_k..E. \quad H_j)$.

Es wird $h(E3 \; E1 \quad H1)$ bestimmt. Mit Ziffer 1. gilt:

$$n(H1 \; E3 \; E1) = 4.43 .$$

$$h(E3 \; E1 | H1) = \frac{n(H1 \; E3 \; E1)}{n(H1)} = \frac{4.43}{6} \approx 0.74 .$$

5. Ermittlung von Werten der Form h(E$_i$     H$_j$) ± Δh(E,     H$_j$).

Es wird h(E3     H1)± Δh(E3     H1) berechnet.

$$n(H1\ E3) \quad = \sum_{\xi=1}^{6} h(H1\ E3)_\xi$$

$$= \sum_{\xi=1}^{6} h(E3\mid E3')_\xi$$

$$= 0.8 + 1 + 1 + 0.8 + 1 + 0.1$$

$$= 4.7 .$$

$$h(E3\mid H1) \quad = \frac{n(H1\ E3)}{n(H1)} \quad = \frac{4.7}{6} \approx 0.78 .$$

$$\left[\Delta h_u(E3\mid H1)\right]^2 \approx \frac{1}{n(H1)^2} \cdot \sum_{\xi=1}^{6}\left[\Delta h(E3\mid E3')_\xi\right]^2$$

$$= \frac{0.2^2 + 0 + 0 + 0.1^2 + 0 + 0.1^2}{36}$$

$$= \frac{0.06}{36} \approx 0.00167 .$$

$$\left[\Delta h_B(E3\mid H1)\right]^2 \approx \frac{1}{n(H1)} \cdot h(E3\mid H1)\left[1 - h(E3\mid H1)\right]$$

$$= \frac{1}{6} \cdot 0.78\ (1 - 0.78) \approx 0.0286$$

Damit folgt:

$$\Delta h(E3|H1) \approx \sqrt{\left[\Delta h_u(E3|H1)\right]^2 + \left[\Delta h_B(E3|H1)\right]^2}$$

$$= \sqrt{0.00167 + 0.0286} \approx 0.17 \cdot$$

Die Datei 3, die Informationen über die Belastungen bereitstellen soll, enthält folgende Angaben:

1) Für ein beliebiges $B_k$ die Menge aller Merkmale $E_i$, für die $h(E_i \quad B_k) - \Delta h(E_i \quad B_k) > W(E_i)$ ist. Diese Merkmalsmenge wird in Analogie zu Datei 1 als CHARMENG($B_k$) bezeichnet, d.h. es ist die charakterisierende Merkmalsmenge einer Belastung $B_k$.

2) Wie in Datei 1 wird $W(E_i)$ angeben, um einen unmittelbaren Vergleich des Wertes mit $h(E_i \quad B_k)$ zu ermöglichen.

3) Die Zahlenwerte für $h(E_i \quad B_k) \pm \Delta h(E_i \quad B_k)$ werden verfügbar gemacht. Die Gewinnung solcher Werte erfolgt mit Hilfe der Stichprobe einer Population, die ausschließlich aus Fällen besteht, die keine erkennbaren Hypothesen, jedoch die Belastung $B_k$ aufweisen.

Die Struktur der Datei 3 kann als eine verkürzte Form der Datei 1 gewählt werden.

Beispiel:

| $E_i$ | $W(E_i)$ | $h(E_i|B_k) \pm \Delta h(E_i|B_k)$ |
|---|---|---|
| B1 | | |
| E11 | .4 | 1 |
| E12 | .1 | .50 $\pm$.1 |
| E13 | .2 | .33 $\pm$.05 |
| B2 | | |
| E14 | .2 | .90 $\pm$.2 |
| E15 | .3 | .50 $\pm$.1 |
| B3 | | |
| E11 | .2 | 1 |
| E12 | .3 | .83 $\pm$.05 |
| E15 | .1 | .40 $\pm$.05 |
| E18 | .1 | .40 $\pm$.05 |

```
Beispiel einer Datei 3.
Die von einer Belastung B_k verursachten Merk-
mal E_i sind nach fallenden  h(E_i|B_k) geordnet.
Für jedes B_k  sind alle Merkmale E_i mit
h(E_i|B_k) -  Δ h(E_i|B_k)  >  W(E_i) aufgeführt.
```

Die Datei 3 wird dazu verwendet, um bei einer als vorhanden festgestellten Belastung $B_k$ die dadurch verursachten Merkmale benennen zu können. Diese Merkmale dürfen leider nicht sofort aus der Menge der zu verarbeitenden Merkmale entfernt werden. da von vorneherein nicht ausgeschlossen ist. daß auch eine der zugelassenen Hypothesen als Ursache in Frage kommt. Es muß jedoch, unter Verwendung der Informationen aus Datei 3, eine Möglichkeit geschaffen werden. die von Hypothesen verursachten Merkmale von belastungsbedingten Merkmalen zu trennen.

III) Fehlerrechnung

# 0 281 682

Grundsätzliches zu Fehlerrechnungen für Glg.1 und Glg.3

Enthält die Datei 2 eine Stichprobe der Gesamtpopulation, und sind $\xi = 1,...n$ die Ausführungen dieser Stichprobe, so gilt für ein beliebiges Merkmal $E_i$:

$$h(E_i) = \frac{1}{n} \cdot \sum_{\xi=1}^{n} h(E_i | E_i')_\xi \quad ,$$

$(Glg.5)$,

$$\left[ \Delta h_u(E_i) \right]^2 \approx \frac{1}{n^2} \cdot \sum_{\xi=1}^{n} \left[ \Delta h(E_i | E_i')_\xi \right]^2 \quad ,$$

$(Glg.6)$,

$$\left[ \Delta h_B(E_i) \right]^2 \approx \frac{1}{n} \cdot h(E_i) \cdot \left[ 1 - h(E_i) \right] \quad ,$$

$(Glg.7)$,

$$\left[ \Delta h(E_i) \right]^2 \approx \left[ \Delta h_u(E_i) \right]^2 + \left[ \Delta h_B(E_i) \right]^2 .$$

$(Glg.8)$.

Für ein beliebiges Merkmalsprodukt $(E_Y...E_1)$ wird dann der mittlere Fehler $\Delta h(E_Y...E_1)$ wie folgt berechnet:

$$\left[ \Delta h(E_Y...E_1) \right]^2$$
$$\approx \left[ \frac{\partial h(E_Y...E_1)}{\partial h(E_Y)} \cdot \Delta h(E_Y) \right]^2 + ... + \left[ \frac{\partial h(E_Y...E_1)}{\partial h(E_1)} \cdot \Delta h(E_1) \right]^2 \quad ,$$

wobei gilt:

$$\frac{\partial h(E_Y...E_i...E_1)}{\partial h(E_i)}$$

$$:= \max \left\{ \left| \frac{\partial h(E_Y...E_i...E_1)}{\partial h(E_i)_+} \right| , \left| \frac{\partial h(E_Y...E_i...E_1)}{\partial h(E_i)_-} \right| \right\} \quad ,$$

17

$$\frac{\partial h(E_Y \ldots E_i \ldots E_1)}{\partial h(E_i)_+} := \frac{h(E_Y \ldots \overline{E_i} \ldots E_1)}{- h(\overline{E_i})} ,$$

(Glg.9),

$$\frac{\partial h(E_Y \ldots E_i \ldots E_1)}{\partial h(E_i)_-} := \frac{h(E_Y \ldots E_i \ldots E_1)}{h(E_i)} ,$$

(Glg.10),

$$\frac{\partial h(E_Y \ldots \overline{E_i} \ldots E_1)}{\partial h(E_i)_+} := - \frac{h(E_Y \ldots \overline{E_i} \ldots E_1)}{h(\overline{E_i})} ,$$

(Glg.11),

$$\frac{\partial h(E_Y \ldots \overline{E_i} \ldots E_1)}{\partial h(E_i)_-} := - \frac{h(E_Y \ldots E_i \ldots E_1)}{h(E_i)} ,$$

(Glg.12)

$$\frac{\partial h(E_Y \ldots \not{E_i} \ldots E_1)}{\partial h(E_i)_{+/-}} := 0 ,$$

(Glg.13) .

Die Herleitung der Gleichungen 9 bis 13 ist in Anhang 4 angegeben.

## Fehlerrechnung für Glg.:3

Der exakte Verlauf der Fehlerrechnung wird für die schwierige Glg.3 vorgeführt.
Abgekürzt kann Glg.3 für X unsichere Merkmale und Y Merkmale insgesamt wie folgt geschrieben werden:

$$R := \frac{Z}{N} := \frac{\sum_{\nu=0}^{2^X - 1} Z_\nu}{\sum_{\nu=0}^{2^X - 1} N_\nu}$$

mit

$$Z_\nu := h(H_j \cdot REC_\nu) \cdot \overbrace{\frac{h(E_\chi \mid E'_\chi)}{h(E_\chi)} \cdot \ldots \cdot \frac{h(E_1 \mid E'_1)}{h(E_1)}}^{(REC_\nu)} \quad ,$$

$$N_\nu := h( \quad REC_\nu) \cdot \overbrace{\frac{h(E_\chi \mid E'_\chi)}{h(E_\chi)} \cdot \ldots \cdot \frac{h(E_1 \mid E'_1)}{h(E_1)}}^{(REC_\nu)} \cdot$$

Diese Schreibweise kann auch am Beispiel der Glg.14 nachvollzogen werden. Dann gilt:

$$\Delta R \approx \left[ \left( \frac{\partial R}{\partial h(E_Y)} \cdot \Delta h(E_Y) \right)^2 + \ldots + \left( \frac{\partial R}{\partial h(E_1)} \cdot \Delta h(E_1) \right)^2 \right. $$
$$\left. + \left( \frac{\partial R}{\partial h(E_\chi \mid E'_\chi)} \cdot \Delta h(E_\chi \mid E'_\chi) \right)^2 + \ldots + \left( \frac{\partial R}{\partial h(E_1 \mid E'_1)} \cdot \Delta h(E_1 \mid E'_1) \right)^2 \right]^{1/2} \quad ,$$

wobei für $i \in \{1,\ldots,k\}$ gilt:

$$\frac{\partial R}{\partial h(E_i)} := \max \left\{ \left| \frac{\partial R}{\partial h(E_i)_+} \right| \quad , \quad \left| \frac{\partial R}{\partial h(E_i)_-} \right| \right\} \quad ,$$

$$\frac{\partial R}{\partial h(E_i)_+} = \frac{1}{N} \cdot \frac{\partial Z}{\partial h(E_i)_+} - \frac{Z}{N^2} \cdot \frac{\partial N}{\partial h(E_i)_+} \, ,$$

$$\frac{\partial R}{\partial h(E_i)_-} = \frac{1}{N} \cdot \frac{\partial Z}{\partial h(E_i)_-} - \frac{Z}{N^2} \cdot \frac{\partial N}{\partial h(E_i)_-} \, ,$$

$$\frac{\partial R}{\partial h(E_i \mid E'_i)} = \frac{1}{N} \cdot \frac{\partial Z}{\partial h(E_i \mid E'_i)} - \frac{Z}{N^2} \cdot \frac{\partial N}{\partial h(E_i \mid E'_i)} \quad .$$

Berechnet man die letzten drei Gleichungen, so stehen für jede dieser Gleichungen auf der rechten Seite $\nu = 0,...,2^X-1$ Summanden, die für beliebiges $E_i$ mit

$$S_\nu\left(\frac{\partial R}{\partial h\langle E_i\rangle_+}\right), \quad S_\nu\left(\frac{\partial R}{\partial h\langle E_i\rangle_-}\right) \quad \text{und} \quad S_\nu\left(\frac{\partial R}{\partial h\langle E_i|E_i'\rangle}\right)$$

bezeichnet werden.

( Exemplarisch ist die Herleitung für

$$S_\nu\left(\frac{\partial R}{\partial h(E_i)_+}\right), i \leq X,$$

für das Beispiel der Glg.14 im Anhang 5 angegeben. )

Es ergibt sich für beliebiges i, i $\leq$ X:

$$S_\nu\left(\frac{\partial R}{\partial h\langle E_i\rangle_+}\right) :=$$

$$\begin{cases} 0, \text{ falls } E_i \text{ in REC}_\nu \text{ negiert,} \\[2em] \overline{\frac{h\langle E_X|E_X'\rangle}{h\langle E_X\rangle} \cdots \frac{h\langle E_1|E_1'\rangle}{h\langle E_1\rangle}}^{(REC_\nu)} \left[\frac{1}{N}\cdot\left(\frac{h\langle H_j\cdot RED_\nu\cdot\overline{E_i}\rangle}{h\langle\overline{E_i}\rangle} - \frac{h\langle H_j\cdot REC_\nu\rangle}{h\langle E_i\rangle}\right)\right. \\[2em] \left.- \frac{Z}{N^2}\cdot\left(\frac{h\langle RED_\nu\cdot\overline{E_i}\rangle}{h\langle\overline{E_i}\rangle} - \frac{h\langle REC_\nu\rangle}{h\langle E_i\rangle}\right)\right], \text{ sonst.} \end{cases}$$

Hierbei bedeutet

$$\overline{(REC_\nu)},$$

daß unter dieser Klammer alle Merkmale zu negieren sind, die in $REC_\nu$ negiert sind.

$RED_\nu$ bezeichnet das reduzierte Merkmalsprodukt, es entsteht aus $REC_\nu$ durch Entfernung von $E_i$, wobei $E_i$ das Merkmal ist, das in

$$\frac{\partial R}{\partial h\langle E_i\rangle}$$

im Nenner steht.

$$S_{\nu}\left(\frac{\partial R}{\partial h\langle E_i\rangle_-}\right) :=$$

$$\begin{cases} 0, \text{ falls } E_i \text{ in } REC_{\nu} \text{ unnegiert,} \\[2mm] \overbrace{-\dfrac{h\langle E_{\chi}|E_{\chi}^{!}\rangle}{h\langle E_{\chi}\rangle}\cdot \ldots \cdot \dfrac{h\langle E_1|E_1^{!}\rangle}{h\langle E_1\rangle}}^{\langle REC_{\nu}\rangle}\cdot\left[\dfrac{1}{N}\cdot\left(\dfrac{h\langle H_j\cdot RED_{\nu}\cdot E_i\rangle}{h\langle E_i\rangle} - \dfrac{h\langle H_j\cdot REC_{\nu}\rangle}{h\langle\overline{E}_i\rangle}\right)\right. \\[4mm] \left. -\dfrac{Z}{N^2}\cdot\left(\dfrac{h\langle RED_{\nu}\cdot E_i\rangle}{h\langle E_i\rangle} - \dfrac{h\langle REC_{\nu}\rangle}{h\langle\overline{E}_i\rangle}\right)\right] , \text{ sonst.} \end{cases}$$

Für beliebiges $i$, $i > X$ gilt:

$$S_{\nu}\left(\frac{\partial R}{\partial h\langle E_i\rangle_+}\right) := SIGN\cdot\overbrace{\frac{h\langle E_{\chi}|E_{\chi}^{!}\rangle}{h\langle E_{\chi}\rangle}\ldots\frac{h\langle E_1|E_1^{!}\rangle}{h\langle E_1\rangle}}^{\langle REC_{\nu}\rangle}\cdot$$

$$\cdot\left[\frac{1}{N}\cdot\frac{h\langle H_j\ RED_{\nu}\cdot\overline{E}_i\rangle}{h\langle\overline{E}_i\rangle} - \frac{Z}{N^2}\frac{h\langle RED_{\nu}\cdot\overline{E}_i\rangle}{h\langle\overline{E}_i\rangle}\right]$$

$$S_{\nu}\left(\frac{\partial R}{\partial h\langle E_i\rangle_-}\right) := SIGN\cdot\overbrace{\frac{h\langle E_{\chi}|E_{\chi}^{!}\rangle}{h\langle E_{\chi}\rangle}\ldots\frac{h\langle E_1|E_1^{!}\rangle}{h\langle E_1\rangle}}^{\langle REC_{\nu}\rangle}\cdot$$

$$\cdot\left[\frac{1}{N}\frac{h\langle H_j\cdot RED_{\nu}\cdot E_i\rangle}{h\langle E_i\rangle} - \frac{Z}{N^2}\cdot\frac{h\langle RED_{\nu}\cdot E_i\rangle}{h\langle E_i\rangle}\right]\cdot$$

Hierbei ist:

$$SIGN := \begin{cases} +1 , \text{ falls } E_i \text{ in } REC_o \text{ unnegiert,} \\ -1 , \text{ falls } E_i \text{ in } REC_o \text{ negiert.} \end{cases}$$

Abschließend gilt für beliebiges i, i < X:

$$S_j\left(\frac{\partial R}{\partial h\langle E_i | E_i'\rangle}\right) := SIGN_j \cdot \overbrace{\frac{h\langle E_X | E_X'\rangle}{h\langle E_X\rangle} \cdot \ldots \cdot \frac{h\langle E_i | E_i'\rangle}{h\langle E_i\rangle} \cdot \ldots \cdot \frac{h\langle E_1 | E_1'\rangle}{h\langle E_1\rangle}}^{(REC_j)} \cdot$$

$$\cdot \left[\frac{1}{N} \cdot h\langle H_j \cdot REC_j\rangle - \frac{Z}{N^2} \cdot h\langle REC_j\rangle\right] \cdot$$

Hierbei bedeutet $\diagup$ die Streichung des $h\langle E_i | E_i'\rangle$ -Terms,

und es ist

$$SIGN_j := \begin{cases} +1 \;,\; \text{falls } E_i \text{ in } REC_j \text{ unnegiert,} \\ -1 \;,\; \text{falls } E_i \text{ in } REC_j \text{ negiert.} \end{cases}$$

Der Ablauf der Fehlerrechnung wird in einem Flußdiagramm im Anhang 1 dargestellt.

<u>Grundsätzliches</u> <u>zu</u> <u>Fehlerrechnungen</u> <u>für</u> <u>Glg.2</u> <u>und</u> <u>Glg.4</u>

Enthält die Datei 2 J Stichproben der Subpopulationen mit Eigenschaft $H_\mu$, $\mu = 1,\ldots,J$, und sind $\xi = 1,\ldots,n(H_j)$ die Ausführungen mit der Eigenschaft $H_j$ so gilt für ein beliebiges Merkmal $E_i$:

$$h\langle E_i | H_j\rangle = \frac{1}{n\langle H_j\rangle} \cdot \sum_{\xi=1}^{n(H_j)} h\langle E_i | E_i'\rangle_\xi \;,$$

(Glg.5a),

$$\left[\Delta h_u \langle E_i | H_j\rangle\right]^2 \approx \frac{1}{n\langle H_j\rangle^2} \cdot \sum_{\xi=1}^{n(H_j)} \left[\Delta h\langle E_i | E_i'\rangle_\xi\right]^2 \;,$$

(Glg.6a)

$$\left[\Delta h_B \langle E_i | H_j\rangle\right]^2 \approx \frac{1}{n\langle H_j\rangle} \cdot h\langle E_i | H_j\rangle \cdot \left[1 - h\langle E_i | H_j\rangle\right] \;,$$

(Glg.7a)

$$\left[\Delta h\left(E_i|H_j\right)\right]^2 \approx \left[\Delta h_A\left(E_i|H_j\right)\right]^2 + \left[\Delta h_B\left(E_i|H_j\right)\right]^2,$$

(Glg.8a).

Für ein beliebiges Merkmalsprodukt $(E_\gamma...E_1)$ wird dann der absolute Größtfehler $\Delta h(E_\gamma...E_1|H_j)$ wie folgt berechnet:

$$\Delta h\left(E_\gamma...E_1|H_j\right) \approx$$

$$\frac{\partial h\left(E_\gamma...E_1|H_j\right)}{\partial h\left(E_\gamma|H_j\right)_{+/-}} \cdot \Delta h\left(E_\gamma|H_j\right) + ... + \frac{\partial h\left(E_\gamma...E_1|H_j\right)}{\partial h\left(E_1|H_j\right)_{+/-}} \cdot \Delta h\left(E_1|H_j\right) \;,\; mit$$

$$\frac{\partial h\left(E_\gamma...E_i...E_1|H_j\right)}{\partial h\left(E_i|H_j\right)_{+/-}} \cdot \Delta h\left(E_i|H_j\right)$$

$$:= \begin{cases} \dfrac{\partial h\left(E_\gamma...E_i...E_1|H_j\right)}{\partial h\left(E_i|H_j\right)_+} \cdot \Delta h\left(E_i|H_j\right) \;,\; falls\; \Delta h\left(E_i|H_j\right) > 0 \\[3em] \dfrac{\partial h\left(E_\gamma...E_i...E_1|H_j\right)}{\partial h\left(E_i|H_j\right)_-} \cdot \Delta h\left(E_i|H_j\right) \;,\; falls\; \Delta h\left(E_i|H_j\right) < 0 \;, \end{cases}$$

$$\frac{\partial h\left(E_\gamma...E_i...E_1|H_j\right)}{\partial h\left(E_i|H_j\right)_+} := \frac{h\left(E_\gamma...\overline{E}_i...E_1|H_j\right)}{h\left(\overline{E}_i|H_j\right)} \;,$$

(Glg.9a),

$$\frac{\partial h\left(E_\gamma...E_i...E_1|H_j\right)}{\partial h\left(E_i|H_j\right)_-} := \frac{h\left(E_\gamma...E_i...E_1|H_j\right)}{h\left(E_i|H_j\right)} \;,$$

(Glg.10a),

$$\frac{\partial h\left(E_\gamma...\overline{E}_i...E_1|H_j\right)}{\partial h\left(E_i|H_j\right)_+} := -\frac{h\left(E_\gamma...\overline{E}_i...E_1|H_j\right)}{h\left(\overline{E}_i|H_j\right)} \;,$$

(Glg.11a),

$$\frac{\partial\, h(E_\gamma \ldots \overline{E}_i \ldots E_1 | H_j)}{h(E_i | H_j)} \; := \; - \; \frac{h(E_\gamma \ldots E_i \ldots E_1 | H_j)}{h(E_i | H_j)} \; ,$$

(Glg.12a),

$$\frac{\partial\, h(E_\gamma \ldots \not{E}_i \ldots E_1 | H_j)}{\partial\, h(E_i | H_j)}_{+/-} \; := \; 0 \; .$$

(Glg.13a).

Den absoluten Größtfehler erhält man, wenn die Fehlervorzeichen der $\Delta h(E_\lambda \;\; H_j)$, $\lambda = 1 \ldots Y$ so gewählt werden, daß der Fehler maximal wird.

Fehlerrechnung für Glg.4:

Der exakte Verlauf der Fehlerrechnung wird für die schwierige Glg.4 vorgeführt.
Abgekürzt schreibt man Glg.4 für X unsichere Merkmale und Y Merkmale insgesamt wie folgt:

$$R \; := \; \frac{Z}{N} \; := \; \frac{\sum\limits_{\nu=0}^{2^X-1} Z_\nu}{\sum\limits_{\nu=0}^{2^X-1} N_\nu} \; ,$$

wobei die $Z_\nu$ und $N_\nu$, $\nu = 0 \ldots 2^X-1$, die in Glg.4 enthaltenen Zähler-bzw. Nenner-Summanden sind.
Die $Z_\nu$ und $N_\nu$, $\nu = 0 \ldots 2^X-1$ werden jeweils in 2 Faktoren zerlegt:

$$Z_\nu = \hat{Z}_\nu . Q_\nu$$
$$N_\nu = \hat{N}_\nu . Q_\nu,$$

wobei gilt:

$$Q_\nu \; := \; \frac{\overbrace{h(E_X | E'_X) . \quad \ldots \quad . h(E_1 | E'_1)}^{(REC_\nu)}}{\underbrace{\left( \sum\limits_\mu h(E_X | H_\mu) . h(H_\mu) \right) . \ldots . \left( \sum\limits_\mu h(E_1 | H_\mu) . h(H_\mu) \right)}_{(REC_\nu)}} \; ,$$

$$\hat{Z}_\nu \; := \; h(REC_\nu | H_j) . h(H_j) \; ,$$

$$\hat{N}_\nu \; := \; \sum\limits_\mu h(REC_\nu | H_\mu) . h(H_\mu) .$$

Damit folgt für R:

$$R = \frac{\sum\limits_{\nu=0}^{\chi_{i}-1} \hat{Z}_{\nu} \cdot \hat{Q}_{\nu}}{\sum\limits_{\nu=0}^{\chi_{i}-1} \hat{N}_{\nu} \cdot \hat{Q}_{\nu}} \; .$$

Also ergibt sich:

$$\frac{\Delta R}{R} \approx \sum_{\nu=0}^{\chi_{i}-1}\left[\left(\frac{Z_{\nu}}{Z}\right)\cdot\left(\frac{\Delta \hat{Z}_{\nu}}{\hat{Z}_{\nu}}\right) - \left(\frac{N_{\nu}}{N}\right)\cdot\left(\frac{\Delta \hat{N}_{\nu}}{\hat{N}_{\nu}}\right) + \left(\frac{Z_{\nu}}{Z} - \frac{N_{\nu}}{N}\right)\cdot\left(\frac{\Delta Q_{\nu}}{Q_{\nu}}\right)\right] \; .$$

In obiger Gleichung werden die Werte für

$$\frac{\Delta \hat{Z}_{\nu}}{\hat{Z}_{\nu}} \, , \; \frac{\Delta \hat{N}_{\nu}}{\hat{N}_{\nu}}$$

und

$$\frac{\Delta Q_{\nu}}{Q_{\nu}}$$

wie folgt berechnet:

$$\frac{\Delta \hat{Z}_{\nu}}{\hat{Z}_{\nu}} \approx \frac{\sum\limits_{\lambda=1}^{\Upsilon} \frac{\partial h\langle REC_{\nu}|H_{j}\rangle}{\partial h\langle E_{\lambda}|H_{j}\rangle} \cdot \Delta h\langle E_{\lambda}|H_{j}\rangle}{h\langle REC_{\nu}|H_{j}\rangle} + \frac{\Delta h\langle H_{j}\rangle}{h\langle H_{j}\rangle} \; ,$$

$$\frac{\Delta \hat{N}_{\nu}}{\hat{N}_{\nu}} \approx \frac{\sum\limits_{\mu}\left[\left(\sum\limits_{\lambda=1}^{\Upsilon} \frac{\partial h\langle REC_{\nu}|H_{\mu}\rangle}{\partial h\langle E_{\lambda}|H_{\mu}\rangle} \cdot \Delta h\langle E_{\lambda}|H_{\mu}\rangle}{h\langle REC_{\nu}|H_{\mu}\rangle} + \frac{\Delta h\langle H_{\mu}\rangle}{h\langle H_{\mu}\rangle}\right) h\langle REC_{\nu}|H_{\mu}\rangle h\langle H_{\mu}\rangle\right]}{\sum\limits_{\mu} h\langle REC_{\nu}|H_{\mu}\rangle \cdot h\langle H_{\mu}\rangle} \; ,$$

$$\frac{\Delta Q_\nu}{Q_\nu} \approx \sum_{\lambda=1}^{X} \overbrace{\left( \frac{\Delta h(E_\lambda | E'_\lambda)}{h(E_\lambda | E'_\lambda)} - \frac{\sum_\mu \left[ \left( \frac{\Delta h(E_\lambda | H_\mu)}{h(E_\lambda | H_\mu)} + \frac{\Delta h(H_\mu)}{h(H_\mu)} \right) \cdot h(E_\lambda | H_\mu) \cdot h(H_\mu) \right]}{\sum_\mu h(E_\lambda | H_\mu) \cdot h(H_\mu)} \right)}^{(REC_\nu)} .$$

Man setzt zunächst alle Vorzeichen der Fehler

$\Delta h(E_\lambda \quad H_\mu)$ für $\lambda = 1,...,Y$ und $\mu = 1....J$,

$\Delta h(E_\lambda \quad E'_\lambda )$ für $\lambda = 1...X$ ,

$\Delta h(H_\mu)$ für $\mu = 1,...,J$

positiv an. Sodann wechselt man nacheinander für jeden einzelnen Fehler das Vorzeichen und berechnet $\frac{\Delta R}{R}$ erneut. Ist der dann berechnete Wert für $\frac{\Delta R}{R}$ größer als der zuvor berechnete Wert. so bleibt das geänderte Vorzeichen bestehen, andernfalls wird der Wechsel zurückgenommen.

Durch dieses Vorgehen bestimmt man die maximale Abweichung in positiver Richtung. ( Will man keine Symmetrie des Fehlerbereichs voraussetzen. so ist auch die maximale Abweichung in negativer Richtung zu berechnen. )

Für den Ablauf der Fehlerrechnung werden die Fehler von $1:=1$ bis $1:=1_{max}$ in beliebiger Weise durchnummeriert. Dieser Ablauf ist in einem Flußdiagramm in Anhang 2 angegeben.

## IV Eliminierung verfälschender Merkmale und Entscheidungsvorgang

Für die Ermittlung der gesuchten Hypothese bei gleichzeitiger Eliminierung verfälschender Merkmale wird in fünf Schritten das nötige Instrumentarium in Form graphischer Darstellungen bereitgestellt.

Hierzu werden folgende Mengen verwendet:

VERMENG := zur Verarbeitung vorgegebene Merkmalsmenge.

AUFMENG($H_j$) := Menge der Elemente aus VERMENG, die für $H_j$ aufwertend wirken; $\pi$ (AUFMENG($H_j$)) ist dann das daraus gebildete Produkt.

HAUPTMENG := Menge derjenigen Elemente aus VERMENG. die mit Sicherheit von Hypothesen herrühren, und die unter allen Umständen berücksichtigt werden sollen.

BELMENG($B_k$) := Menge der Elemente aus VERMENG $\cap$ CHARMENG($B_k$). Hierbei handelt es sich um möglicherweise belastungsbedingte Merkmale.

ZMENG := Menge der Elemente aus VERMENG, für die Zweifel bestehen, daß es sich um gültige Merkmale handelt, und nicht um lediglich merkmalsähnliche Beobachtungen.

IND := Indexmenge der mit Schritt 1 ermittelten m wahrscheinlichsten Hypothesen, $m \epsilon IN$.

DISPOS := (VERMENG\ZMENG)\ ( $\bigcup$ BELMENG($B_{\varkappa}$ )).

Menge der Elemente von VERMENG, die nach Entfernung zweifelhafter und möglicherweise belastungsbedingter Merkmale zur Disposition stehen.

## SCHRITT 1

Für alle Hypothesen $H_\mu$, $\mu = 1...J$ wird h($H_\mu$ $\quad$ $\pi$ (AUFMENG($H_\mu$))) berechnet. Für die m wahrscheinlichsten $H_\mu$ wird eine Abbildung erstellt. die mindestens folgende Angaben enthält:

-h($H_j$ \ $\pi$(AUFMENG($H_j$))) , angegeben durch eine waagerechte Markierung mit rechts daneben stehendem Index der Hypothese.

-AUFMENG($H_j$), dargestellt als senkrecht angeordnete Folge der entsprechenden Merkmalsindizes.

-Für jedes angegebene Merkmal E, von AUFMENG($H_j$) den Wert von h(E, \ $E'_j$ ), in runden Klammern rechts neben dem Merkmalsindex.

Zweck:

1. Der hauptsächliche Zweck von Schritt 1 besteht in der Begrenzung von $H_\mu$, $\mu = 1...J$ auf die m chancenreichsten Hypothesen; die Indizes dieser Hypothesen werden in IND zusammengefaßt.

2. Zusätzlich erlaubt die graphische Darstellung eine Abschätzung der Größenordnung für die zu erwartenden Hypothesenwahrscheinlichkeiten und eine erste Festlegung der für Schritt 3 geforderten Grenzen G1, G2 und G3.

3. Die mit Schritt 1 erstellte Graphik vermittelt weiterhin einen ersten Ueberblick und dient dadurch der geforderten Transparenz des Entscheidungsvorgangs. Zur besseren Orientierung können im Schaubild noch die Mengen VERMENG, HAUPTMENG, ZMENG und alle BELMENG($B_\mu$) angegeben werden.

Beispiel:

Hypothesenwahrscheinlichkeit

Hypothesenindex

-80

-65

-91

usw.

1
0.9
0.8
0.7
0.6
0.5
0.4
0.3
0.2
0.1

——— H80 ——— H65 ——— H91 ——— — — —

AUFMENG($H_j$)   : 5(1)      5(1)      4(1)
                   7(9)      13(1)     23(1)
                   13(1)     32(1)     24(.8)
                             40(.8)

VERMENG     : 4(1) , 5(1) , 7(.9) , 13(1) , 23(1) , 24(.8),
              25(1) , 31(1) , 32(1) , 40(.8) , 60(.8).

HAUPTMENG   : 5(1) , 13(1) , 23(1) , 24(.8)

ZMENG       : 7(.9)

BELMENG(B112): 32(1)

BELMENG(B117): 40(.8) , 60(.8)

Darstellung der  m  wahrscheinlichsten Hypothesen nach
Berechnung von h($H_\mu$ | $\pi$ (AUFMENG($H_\mu$))).
Hierbei bedeutet  z.B. die Kennzeichnung eines Mengenelements durch 40(.8):
Merkmal E40 mit h(E40|E40') := 0.8.

### Schritt 2

Für jedes $H_u$, $u_\epsilon$ IND wird versucht, eine dazu gleichzeitig existierende weitere Hypothese zu bestimmen. Hierzu wird vorausgesetzt, daß die von zwei gleichzeitig existierenden Hypothesen jeweils verursachten Merkmalsmengen nur einen kleinen Durchschnitt besitzen, dessen Elemente für die betroffenen Hypothesen von geringer Bedeutung sind.

Man bestimmt also die Paare $(H_a, H_b)$ aus der Menge der m besten Hypothesen, für die gilt:

$$1. \quad \text{AUFMENG}(H_a) \cap \text{AUFMENG}(H_b)$$
$$< 0.25 \cdot \left( \text{AUFMENG}(H_a) \cup \text{AUFMENG}(H_b) \right).$$

$$2. \quad \frac{h(E_i | H_a)}{h(E_i)} < 1.25 \quad \underline{\text{oder}} \quad \frac{h(E_i | H_b)}{h(E_i)} < 1.25$$

$$\text{für alle } E_i \in \left( \text{AUFMENG}(H_a) \cap \text{AUFMENG}(H_b) \right).$$

Die angegebenen Zahlenwerte 0.25 bzw. 1.25 sind als default-values anzusehen; sie können durch den Benutzer des Systems entsprechend den Gegebenheiten verändert werden. Eine Veränderung ist insbesondere dann erforderlich, wenn keine oder zu viele Paare gleichzeitig bestehender Hypothesen entstehen.

In der graphischen Darstellung wird unter der Eintragung der letzten, belastungsbedingten Merkmalsmenge eine Zeile für die Eintragung gleichzeitig bestehender Paare verwendet, so daß die paarweise zusammengefaßten Hypothesen-Indizes in waagerechter Anordnung erscheinen

### Zweck

Es sei $(H_a, H_b)$ ein Paar gleichzeitig erlaubter Hypothesen. Weiter sei $T_l$ eine Teilmange aus VERMENG, so daß z.B. $h(H_a \quad \pi(T_l))$ einen hohen Wert erreicht und $H_a$ als gesuchte Hypothese in Frage kommt. Dann werden die Merkmale aus VERMENG\$T_l$ durch die möglicherweise gleichzeitig bestehende Hypothese $H_b$ zufriedenstellend erklärt.

### Schritt 3

Von VERMENG wird die Potenzmenge $\gamma(\text{VERMENG})$ gebildet. Aus der Menge $\gamma(\text{VERMENG})$ werden diejenigen Mengen in $\{T_\phi \mid \phi = 1,...,U\}$ zusammengefaßt, die HAUPTMENG enthalten und eine Elementanzahl $\leq$ k besitzen, k $\epsilon$ $N$.

a) Sei $T_l$ eine beliebige Teilmenge, dann werden für alle $u \in$ IND die Werte $h(H_u \quad \pi(T_l))$ berechnet. Eine Menge $\{h(H_u \quad \pi(T_l)) \quad u \in$ IND$\}$ wird genau dann berücksichtigt und für eine Auswahl gemäß der folgenden Ziffer b) gespeichert, wenn der beste Wert eine vorab gesetzte Grenze G3 übersteigt. Diese Grenze G3 kann anhand der mit Schritt 1 gewonnenen Abbildung festgelegt werden.

b) Dies führt man für alle $T_\phi$, $\phi = 1,...,U$ durch. Da nur eine kleine Anzahl in die engere Auswahl gelangen kann, konkurrieren die gefundenen Teilmengen in einem Verdrängungswettbewerb gegeneinander:

-Es werden mit Hilfe der durch Schritt 1 gewonnenen Abbildung drei Grenzwerte G1, G2 und G3 eingeführt, wobei 1 > G1 > G2 > G3 gilt.

-Eine Teilmenge T1 heißt besser als die Teilmenge T2, wenn der beste Wert aus $\{h(H_u \quad \pi(\text{T1})-) \quad u \in$ IND$\}$ einen höheren Grenzwert aus $\{$G1, G2, G3$\}$ überschreitet als der beste Wert aus $\{h-(H_u \quad \pi(\text{T2})) \quad u \in$ IND$\}$.

-Sei $d_{T_l}$ der Abstand, der für beliebiges $T_l$ zwischen dem bestem und dem zweitbesten Wert aus $\{h-(H_u \quad \pi(T_l)) \quad u_\epsilon$IND$\}$ besteht ( wobei die beste und zweitbeste. Hypothese kein Paar gemäß Schritt 2 sein dürfen ). Dann gilt: Eine Teilmenge T1 heißt besser als eine Teilmenge T2. wenn $d_{T1} > d_{T2}$ ist, bei einem gemeinsamen höchsten Grenzwert aus {G1. G2. G3}

Bemerkung:

Die tatsächlich zutreffende Hypothese verrät sich dadurch. daß es eine Teilmenge $T_\ell$ gibt. so daß die zugehörige Menge {h(H$_\mu$    $\pi(T_\ell)$)    $\mu \epsilon$ IND} hohe Werte erreicht. wobei gleichzeitig der Abstand des höchsten zum zweithöchsten Wert deutlich besser ist als bei konkurrierenden Folgen. die vergleichbar hohe Werte erreichen.

c) Die besten $T_\omega$ werden in der graphischen Darstellung auf der Abszisse so angeordnet. daß von zwei Teilmengen die bessere weiter links steht. Die Graphik enthält dann folgende Angaben:

-Für beliebiges $T_\ell$ und alle $\mu \epsilon$ IND wird die Eintragung aller h(H$_\mu$    $\pi(T_\ell)$)-Werte in senkrechter Anordnung vorgenommen. Die Eintragung erfolgt durch eine waagerechte Markierung mit rechts daneben stehendem Index der Hypothese.

-Für beliebiges $T_\ell$ werden die darin enthaltenen Mengenelemente angegeben. Hierzu werden in senkrechter Anordnung die Merkmal-Indizes. und rechts daneben in Klammer die h(E$_i$    $E'_i$ )-Werte notiert. Hierbei wird $T_\ell$ in die Menge 1) (HAUPTMENG) und die Menge 2) ($T_\ell$ HAUPTMENG) aufgeteilt.

-Menge 3) (VERMENG\$T_\ell$) enthält die nicht berücksichtigten Merkmale.

-Unterhalb einer Trennung werden als zusätzliche Informationen die Paare gleichzeitig möglicher Hypothesen. BELMENG(B$_x$ ) und ZMENG eingetragen.

Damit läßt sich ein Schaubild erstellen. für das mit der nachfolgenden Abbildung ein Beispiel gegeben wird:

Hypothesenwahrscheinlichkeit

```
     ↑
1.0 ─              |          |          |              '
0.9 ─              |        -90        |          |              '
G1 ──────────    -80        -33        |          .              '
0.8 ─              |        -73        |    -73        :          |
G2 ────────                 -64        :                          |
0.7 ─              |                    :              |    -64        |
                            -117                                  |
0.6 ─                       -81        |    -64        |              | usw.
           -73              |                          |              '
G3  0.5 ─               -64  |                        -33        |
           -51              -51        |    -117              |
0.4 ─       -90              |                          |    -90
0.3 ─       -50              |                        -51        -80
                            |          |    -51        |    -81        |
0.2 ─       -33              |    -50        -50        |    -33
0.1 ─              |          |          |              |
```

|                          |          |          |          |
|--------------------------|----------|----------|----------|
| 1) HAUPTMENG :           | 5(1)     | 5(1)     | 5(1)     | 5(1)     |
|                          | 13(1)    | 13(1)    | 13(1)    | 13(1)    |
|                          | 23(1)    | 23(1)    | 23(1)    | 23(1)    |
|                          | 24(.8)   | 24(.8)   | 24(.8)   | 24(.8)   |
| 2) $T_\ell$\HAUPTMENG :  | 4(1)     | 25(1)    | 4(1)     | 4(1)     |
|                          | 25(1)    | 40(.8)   | 7(.9)    | 25(1)    |
|                          | 31(1)    | 60(.8)   | 25(1)    | 31(1)    |
|                          | 40(.8)   |          | 31(1)    | 32(1)    |
|                          | 60(.8)   |          |          |          |
| 3) VERMENG\$T_\ell$ :    | 7(.9)    | 4(1)     | 32(1)    | 7(.9)    |
|                          | 32(1)    | 7(.9)    | 40(.8)   | 40(.8)   |
|                          |          | 31(1)    | 60(.8)   | 60(.8)   |
|                          |          | 32(1)    |          |          |

Paare gleichzeitig möglicher Hypothesen: (80,91), (121,125),...

BELMENG(B112)    :   32(1)

BELMENG B(117)   :   40(.8), 60(.8)

ZMENG            :   7(.9)

Beispiel der graphischen Darstellung von Entscheidungsgrundlagen.

### Schritt 4

Ist mit Schritt 3 bereits eine Entscheidung möglich, so ist Schritt 4 noch zur Kontrolle aufzuführen.

Von DISPOS wird die Potenzmenge $\gamma$(DISPOS) gebildet. Aus der Menge $\gamma$(DISPOS) wurden diejenigen Mengen in $\{T_\chi \mid \chi = 1...V$ zusammen gefaßt, die HAUPTMENG enthalten und eine Elementzahl < k, $k \in \mathbb{N}$ besitzen. Sodann wird völlig analog zu Schritt 3 die entsprechende Graphik erstellt.

### Schritt 5

Aus VERMENG wird ein beliebiges BELMENG($B_k$) oder eine Untermenge von ZMENG entfernt und gleichzeitig zu DISPOS hinzugefügt. Schritt 3 und Schritt 4 werden wiederholt und die entstandenen Schaubilder verglichen.

Führt man dies schrittweise für alle BELMENG($B_\chi$) und schließlich für ganz ZMENG durch, so geht das Schaubild von Schritt 3 in das Schaubild von Schritt 4 über und umgekehrt. Bei einem schrittweisen Vorgehen wird sich irgendwann die bestmöglich Teilmenge anhand der nachfolgend aufgelisteten Entscheidungskriterien bestimmen lassen.

( Denkbar wäre hier zum Beispiel die Anzeige der beiden Schaubilder auf getrennten Bildschirmen.)

### Entscheidungskriterien:

Eine Hypothese $H_{best}$ ist die beste Hypothese, falls es eine Teilmenge $T_{best} \in \{T_\varphi \mid \varphi = 1...U\}$ oder $T_{best} \in \{T_\chi \mid \chi = 1...V\}$ gibt, so daß $h(H_{best} \mid \pi(T_{best}))$ der höchste Wert der Menge $\{h(H_\_ \mid \pi(T_{best})) \mid \mu \in$ IND$\}$ ist, wobei für $T_{best}$ gilt:

1. max $\{h(H_\mu \mid \pi(T_{best})) \mid \mu \in$ IND$\}$ überschreitet einen solchen Grenzwert aus $\{G1, G2, G3\}$, so daß keine konkurrierende Menge einen höheren Grenzwert überschreitet.

2. Für $\{h(H_\mu \mid \pi(T_{best})) \mid \mu \in$ IND$\}$ ist der Abstand des besten zum zweitbesten Wert größer als bei allen konkurrierenden Mengen, deren höchste Werte denselben Grenzwert überschreiten. Hierbei gehört der zweitbeste Wert zu einer Hypothese, die mit $H_{best}$ kein Paar gleichzeitig erlaubter Hypothesen bildet.

3. $\Delta h(H_{best} \mid \pi(T_{best}))$ liegt in derselben Größenordnung wie die Fehler der höchsten Werte der konkurrierenden Mengen.

4. Die Merkmale aus VERMENG\$T_{best}$ finden durch andere Ursachen als $H_{best}$ eine ausreichende Erklärung.

## Anhang 1

### Übersichtsblatt

Flußdiagramm für die Berechnung des mittleren absoluten Fehlers von $h(H_j | E_Y ... E_{X+1}, E'_X ... E'_1)$.

Blatt 1

**1** AKT

**2** $(\Delta R)^2 := 0 \;;$

**3** $\lambda := 1 \;;\; y := 0$

**4** $REC_y := AKT$ ohne Unsicherheitskennung

**5** $\dfrac{\partial R}{\partial h\langle E_\lambda\rangle_+} := 0 \;;\; \dfrac{\partial R}{\partial h\langle E_\lambda\rangle_-} := 0 \;;\; \dfrac{\partial R}{\partial h\langle E_\lambda \mid E'_\lambda\rangle} := 0$

**6** $S_y\!\left(\dfrac{\partial R}{\partial h\langle E_\lambda\rangle_+}\right) := 0 \;;\; S_y\!\left(\dfrac{\partial R}{\partial h\langle E_\lambda\rangle_-}\right) := 0 \;;\; S_y\!\left(\dfrac{\partial R}{\partial h\langle E_\lambda \mid E'_\lambda\rangle}\right) := 0$

**7** $RED_y :=$ entferne $\lambda$-tes Ereignis aus $REC_y$

**8** $\lambda \le X$ ? — J / N

**9** Bestimme $S_y\!\left(\dfrac{\partial R}{\partial h\langle E_\lambda\rangle_+}\right)$

**10** Bestimme $S_y\!\left(\dfrac{\partial R}{\partial h\langle E_\lambda\rangle_-}\right)$

**11** Bestimme $S_y\!\left(\dfrac{\partial R}{\partial h\langle E_\lambda \mid E'_\lambda\rangle}\right)$

**12** Bestimme $S_y\!\left(\dfrac{\partial R}{\partial h\langle E_\lambda\rangle_+}\right)$

**13** Bestimme $S_y\!\left(\dfrac{\partial R}{\partial h\langle E_\lambda\rangle_-}\right)$

**14** $\dfrac{\partial R}{\partial h\langle E_\lambda\rangle_+} := \dfrac{\partial R}{\partial h\langle E_\lambda\rangle_+} + S_y\!\left(\dfrac{\partial R}{\partial h\langle E_\lambda\rangle_+}\right)$

**15** $\dfrac{\partial R}{\partial h\langle E_\lambda\rangle_-} := \dfrac{\partial R}{\partial h\langle E_\lambda\rangle_-} + S_y\!\left(\dfrac{\partial R}{\partial h\langle E_\lambda\rangle_-}\right)$

**16** $\dfrac{\partial R}{\partial h\langle E_\lambda \mid E'_\lambda\rangle} := \dfrac{\partial R}{\partial h\langle E_\lambda \mid E'_\lambda\rangle} + S_y\!\left(\dfrac{\partial R}{\partial h\langle E_\lambda \mid E'_\lambda\rangle}\right)$

## Blatt 2

17 | Negiere in $REC_\nu$ von rechts das 1.unnegierte Merkmal und lösche rechts von dieser Stelle alle Negierungen

18 | $\nu := \nu + 1$

19 | $\nu > 2^X - 1$ ?  N / J

20 | $\dfrac{\partial R}{\partial h\langle E_\lambda\rangle} := \max\left\{\left|\dfrac{\partial R}{\partial h\langle E_\lambda\rangle_+}\right|, \left|\dfrac{\partial R}{\partial h\langle E_\lambda\rangle_-}\right|\right\}$

21 | $(\Delta R)^2 := (\Delta R)^2 + \left(\dfrac{\partial R}{\partial h\langle E_\lambda\rangle}\cdot \Delta h\langle E_\lambda\rangle\right)^2 + \left(\dfrac{\partial R}{\partial h\langle E_\lambda \mid E'_\lambda\rangle}\cdot \Delta h\langle E_\lambda \mid E'_\lambda\rangle\right)^2$

22 | $\lambda := \lambda + 1$

23 | $\lambda > Y$ ?  N / J

24 | $\Delta R := \sqrt{(\Delta R)^2}$

Flußdiagramm für die Berechnung des mittleren absoluten Fehlers von $h\langle H_j \mid E_Y \ldots E_{X+1} \; E'_X \ldots E'_1\rangle$.

Erläuterung der Blöcke für das Flußdiagramm der Fehlerrechnung zu Glg.3

1. AKT bezeichnet das aktuelle Merkmalsprodukt. Dieses Produkt enthält diejenigen Merkmale, die zur Bestimmung der Hypothesenwahrscheinlichkeit herangezogen werden. Die Merkmale in AKT können negiert oder unnegiert auftreten.

2. $(\Delta R)^2$ wird initialisiert.

3) $\nu$ und $\lambda$ werden initialisiert.

$\nu$ ist der Zählindex. der die Negierungen in $REC_\nu$ bestimmt: $0 \leq \nu \leq 2^X-1$.

$\lambda$ ist der Zählindex der Merkmale. $1 \leq \lambda \leq Y$.

4) $REC_\nu$ wird aus AKT durch Entfernung der Unsicherheitskennung erstellt.

5) 6) Die Variablen mit den Variablen-Namen

$$\frac{\partial R}{\partial h\langle E_\lambda\rangle_+} \quad , \quad \frac{\partial R}{\partial h\langle E_\lambda\rangle_-} \quad , \quad \frac{\partial R}{\partial h\langle E_\lambda | E_\lambda'\rangle} \quad ,$$

$$S_\nu\left(\frac{\partial R}{\partial h\langle E_\lambda\rangle_+}\right), \quad S_\nu\left(\frac{\partial R}{\partial h\langle E_\lambda\rangle_-}\right), \text{ und } \quad S_\nu\left(\frac{\partial R}{\partial h\langle E_\lambda | E_\lambda'\rangle}\right)$$

werden initialisiert.

7) $RED_\nu$ wird erstellt für die Verwendung in den Berechnungsgleichungen

8) - 13)

$$S_\nu\left(\frac{\partial R}{\partial h\langle E_\lambda\rangle_+}\right), \quad S_\nu\left(\frac{\partial R}{\partial h\langle E_\lambda\rangle_-}\right) \text{ und } \quad S_\nu\left(\frac{\partial R}{\partial h\langle E_\lambda | E_\lambda'\rangle}\right)$$

werden mit Hilfe der entsprechenden Gleichungen berechnet. Hierbei ist für die ersten beiden Ausdrücke zu beachten, ob $\lambda \leq X$ oder $\lambda > X$ gilt.

14) 16) Die in 9) - 13) ermittelten Werte werden zu den zugehörigen Variablen addiert.

17) 18) Interpretiert man die Negierung eines ursprünglich unsicheren Merkmals als eine binäre 1 und die Nicht-Negierung als eine binäre 0, so liefern die ursprünglich unsicheren Merkmale des $REC_\nu$ eine binäre Zahl, deren Wert gleich ist zum Wert von $\nu$.

Beispiel:

(E3 E2 E1) $\triangleq$ (" 0 0) $\Rightarrow \nu = 0.$

(E3 E2 $\overline{E1}$ ) $\triangleq$ (" 0 1) $\Rightarrow \nu = 1.$

(E3 $\overline{E2}$ E1) $\triangleq$ (" 1 0) $\Rightarrow \nu = 2.$

(E3 $\overline{E2}$ $\overline{E1}$ ) $\triangleq$ (" 1 1) $\Rightarrow \nu = 3.$

19) Falls $\nu = 2^X -1$ erreicht ist, sind alle ursprünglich unsicheren Merkmale negiert.

20)

$$\frac{\partial R}{\partial h\langle E_\lambda\rangle}$$

wird berechnet.

21) Die zugehörigen Summanden werden zu $(\Delta R)^2$ addiert.

22) 23) Ist $\lambda > Y$, so sind alle Merkmale berücksichtigt worden.

24) Ergebnis ist der mittlere absolute Fehler $\Delta R$.

Anhang 2

Übersichtsblatt

AKT

$\frac{\Delta R}{R} := 0 \quad | \quad \text{ERGEBNIS} := 0 \quad | \quad \frac{\Delta Q_\nu}{Q_\nu} := 0$

$\ell := 0$

Wechsle Vorzeichen $\ell$

$\nu := 0$

$\text{REC}_0 := \text{AKT}$ ohne Unsicherheitskennung

$\frac{\Delta \hat{Z}_\nu}{\hat{Z}_\nu} := \frac{\Delta h(\text{REC}_\nu | H_j)}{h(\text{REC}_\nu | H_j)} + \frac{\Delta h(H_j')}{h(H_j')}$

$\frac{\Delta \hat{N}_\nu}{\hat{N}_\nu} := \frac{\sum_\lambda \left[\left(\frac{\Delta h(\text{REC}_\nu | H_\lambda)}{h(\text{REC}_\nu | H_\lambda)} + \frac{\Delta h(H_\lambda)}{h(H_\lambda)}\right) \cdot h(\text{REC}_\nu | H_\lambda) \cdot h(H_\lambda)\right]}{\sum_\lambda h(\text{REC}_\nu | H_\lambda) \cdot h(H_\lambda)}$

Benutze Fehlervorzeichen von A

$\lambda := 1$

$E_\lambda$ unsicher ?

$E_\lambda$ in $\text{REC}_\nu$ unnegiert ?

$\frac{\Delta Q_\nu}{Q_\nu} := \frac{\Delta Q_\nu}{Q_\nu} + \frac{\Delta h(E_\lambda | E_\lambda')}{h(E_\lambda | E_\lambda')} + \frac{\sum_\lambda \left[\left(\frac{\Delta h(E_\lambda | H_\lambda)}{h(E_\lambda | H_\lambda)} + \frac{\Delta h(H_\lambda)}{h(H_\lambda)}\right) \cdot h(E_\lambda | H_\lambda) \cdot h(H_\lambda)\right]}{\sum_\lambda h(E_\lambda | H_\lambda) \cdot h(H_\lambda)}$

Nutze Fehlervorzeichen von A

$\frac{\Delta Q_\nu}{Q_\nu} := \frac{\Delta Q_\nu}{Q_\nu} + \frac{\Delta h(\bar{E}_\lambda | E_\lambda')}{h(\bar{E}_\lambda | E_\lambda')} + \frac{\sum_\lambda \left[\left(\frac{\Delta h(\bar{E}_\lambda | H_\lambda)}{h(\bar{E}_\lambda | H_\lambda)} + \frac{\Delta h(H_\lambda)}{h(H_\lambda)}\right) \cdot h(\bar{E}_\lambda | H_\lambda) \cdot h(H_\lambda)\right]}{\sum_\lambda h(\bar{E}_\lambda | H_\lambda) \cdot h(H_\lambda)}$

Nutze Fehlervorzeichen von A

$\lambda := \lambda + 1$

$\lambda > x$ ?

$\frac{\Delta R}{R} := \frac{\Delta R}{R} + \frac{Z_\nu}{Z} \left(\frac{\Delta \hat{Z}_\nu}{\hat{Z}_\nu}\right) - \frac{N_\nu}{N} \left(\frac{\Delta \hat{N}_\nu}{\hat{N}_\nu}\right) + \left(\frac{Z_\nu}{Z} - \frac{N_\nu}{N}\right) \left(\frac{\Delta Q_\nu}{Q_\nu}\right)$

$\text{REC}_\nu :=$ negiere in $\text{REC}_\nu$ von rechts das $\lambda$-unnegierte Merkmal und lösche rechts von dieser Stelle alle Negierungen

$\nu := \nu + 1$

$\nu > 2^x - 1$ ?

$\frac{\Delta R}{R} \geq \text{ERGEBNIS}$ ?

Wechsle Vorzeichen $\ell$

$\text{ERGEBNIS} := \frac{\Delta R}{R}$

$\ell := \ell + 1$

$\ell > \ell_{max}$ ?

ERGEBNIS

Flußdiagramm für die Berechnung des relativen Größtfehlers von $h(H_j | E_1 \ldots E_{Ind} E_1' \ldots E_j')$.

Blatt 1

1. AKT

2. $\dfrac{\Delta R}{R} := 0$ ; ERGEBNIS := 0 ; $\dfrac{\Delta Q_{\nu}}{Q_{\nu}} := 0$

3. $\ell := 0$

4. Wechsle Vorzeichen $\ell$

5. $\nu := 0$

6. $REC_0 := AKT$ ohne Unsicherheitskennung

7.
$$\dfrac{\Delta \hat{Z}_{\nu}}{\hat{Z}_{\nu}} := \dfrac{\Delta h(REC_{\nu}\,|\,H_j)}{h(REC_{\nu}\,|\,H_j)} + \dfrac{\Delta h(H_j)}{h(H_j)}$$

$$\dfrac{\Delta \hat{N}_{\nu}}{\hat{N}_{\nu}} := \dfrac{\sum_{\mu}\left[\left(\dfrac{\Delta h(REC_{\nu}\,|\,H_{\mu})}{h(REC_{\nu}\,|\,H_{\mu})} + \dfrac{\Delta h(H_{\mu})}{h(H_{\mu})}\right)\cdot h(REC_{\nu}\,|\,H_{\mu})\cdot h(H_{\mu})\right]}{\sum_{\mu} h(REC_{\nu}\,|\,H_{\mu})\cdot h(H_{\mu})}$$

Benutze Fehlervorzeichen von A

8. $\lambda := 1$

9. $E_{\lambda}$ unsicher ?  N / J

10. $E_{\lambda}$ in $REC_{\nu}$ unnegiert ?  J / N

11.
$$\dfrac{\Delta Q_{\nu}}{Q_{\nu}} := \dfrac{\Delta Q_{\nu}}{Q_{\nu}} + \dfrac{\Delta h(E_{\lambda}\,|\,E_{\lambda}')}{h(E_{\lambda}\,|\,E_{\lambda}')} +$$

$$\dfrac{\sum_{\mu}\left[\left(\dfrac{\Delta h(E_{\lambda}\,|\,H_{\mu})}{h(E_{\lambda}\,|\,H_{\mu})} + \dfrac{\Delta h(H_{\mu})}{h(H_{\mu})}\right)\cdot h(E_{\lambda}\,|\,H_{\mu})\cdot h(H_{\mu})\right]}{\sum_{\mu} h(E_{\lambda}\,|\,H_{\mu})\cdot h(H_{\mu})}$$

Nutze Fehlervorzeichen von A

12.
$$\dfrac{\Delta Q_{\nu}}{Q_{\nu}} := \dfrac{\Delta Q_{\nu}}{Q_{\nu}} + \dfrac{\Delta h(\overline{E}_{\lambda}\,|\,E_{\lambda}')}{h(\overline{E}_{\lambda}\,|\,E_{\lambda}')} +$$

$$\dfrac{\sum_{\mu}\left[\left(\dfrac{\Delta h(\overline{E}_{\lambda}\,|\,H_{\mu})}{h(\overline{E}_{\lambda}\,|\,H_{\mu})} + \dfrac{\Delta h(H_{\mu})}{h(H_{\mu})}\right)\cdot h(\overline{E}_{\lambda}\,|\,H_{\mu})\cdot h(H_{\mu})\right]}{\sum_{\mu} h(\overline{E}_{\lambda}\,|\,H_{\mu})\cdot h(H_{\mu})}$$

Nutze Fehlervorzeichen von A

**Blatt 2**

13 $\lambda := \lambda + 1$

14 $\lambda > X \ ?$ — N

J

15 $$\frac{\Delta R}{R} := \frac{\Delta R}{R} + \frac{Z_\nu}{Z} \cdot \left(\frac{\Delta \hat{Z}_\nu}{\hat{Z}_\nu}\right) - \frac{N_\nu}{N} \cdot \left(\frac{\Delta \hat{N}_\nu}{\hat{N}_\nu}\right) + \left(\frac{Z_\nu}{Z} - \frac{N_\nu}{N}\right) \cdot \left(\frac{\Delta Q_\nu}{Q_\nu}\right)$$

16 $REC_\nu :=$ negiere in $REC_\nu$ von rechts das 1.unnegierte Merkmal und lösche rechts von dieser Stelle alle Negierungen

17 $\nu := \nu + 1$

18 $\nu > 2^X - 1 \ ?$ — N

J

19 $\frac{\Delta R}{R} \geq ERGEBNIS \ ?$

N — | — J

20 Wechsle Vorzeichen $\ell$

21 $ERGEBNIS := \frac{\Delta R}{R}$

22 $\ell := \ell + 1$

23 $\ell > \ell_{max} \ ?$ — N

J

24 ERGEBNIS

Flußdiagramm für die Berechnung des relativen Größtfehlers von $h(H_j | E_\gamma \ldots E_{X+1} \ E_X \ldots E_1')$.

Erläuterung der Blöcke

1) AKT ist vorgegeben

2) Die Variablen mit den Variablen-Namen $\dfrac{\Delta R}{R}$ , ERGEBNIS und

$$\frac{\Delta Q_\nu}{Q_\nu}$$

werden initialisiert.

$$\frac{\Delta Q_\nu}{Q_\nu}$$

kann für jedes $\nu = 0,...,2^X-1$ durch eine einzige Variable. z.B. $\dfrac{\Delta Q}{Q}$ repräsentiert werden. Der Index $\nu$ ist nur angeschrieben, um die Berechnungsgleichungen formal nicht zu verändern. Völlig entsprechendes gilt für die in Block 7 eingeführten Variablen

$$\frac{\Delta \hat{Z}_\nu}{\hat{Z}_\nu} \quad \text{und} \quad \frac{\Delta \hat{N}_\nu}{\hat{N}_\nu} \ ,$$

die etwa durch

$$\frac{\Delta \hat{Z}}{\hat{Z}} \quad \text{bzw.} \quad \frac{\Delta \hat{N}}{\hat{N}} \ .$$

ersetzt werden können.

3) Beim ersten Durchlauf soll kein Vorzeichen gewechselt werden. Da die Vorzeichen der Fehler von $\ell := 1$ bis $\ell := \ell_{max}$ durchnummeriert sind, ist die Zuweisung $\ell := 0$ wirkungslos.

4) Es werden sukzessive alle noch nicht endgültig festgelegten Vorzeichen gewechselt, um die Auswirkungen auf $\dfrac{\Delta R}{R}$ festzustellen.

5) Der Zählindex $\nu$, mit $0 \leq \nu \leq 2^X-1$ wird initialisiert.

c) $REC_0$ wird hergestellt.

7)

$$\frac{\Delta \hat{Z}_\nu}{\hat{Z}_\nu} \quad \text{und} \quad \frac{\Delta \hat{N}_\nu}{\hat{N}_\nu}$$

werden berechnet. Hierbei werden die Fehlervorzeichen benutzt, wie sie im Fehlervorzeichen-Array $\overline{A}$ enthalten sind.

8) Der Index $\lambda$ der Merkmale wird initialisiert.

9) Falls $D_\lambda$ nicht unsicher ist, wird

$$\frac{\Delta Q_\nu}{Q_\nu}$$

nicht berechnet. Dieser Fall kann eintreten, wenn AKT überhaupt keine unsicheren Merkmale enthält. 10-12)

$$\frac{\Delta Q_\nu}{Q_\nu}$$

wird berechnet. Auch hier werden wieder die Fehlervorzeichen des Arrays A verwendet.

13-14) Die Blöcke 11) bzw. 12) werden so oft durchlaufen, bis alle unsicheren Merkmale von AKT ihren Beitrag zu

$$\frac{\Delta Q_\nu}{Q_\nu}$$

geliefert haben.

15) $\frac{\Delta R}{R}$ wird berechnet. Die Faktoren

$$\frac{Z_\nu}{Z}, \quad -\frac{N_\nu}{N} \quad \text{und} \quad \frac{Z_\nu}{Z} - \frac{N_\nu}{N}$$

sind wegen der vorab durchgeführten Berechnung von $h(H_i \mid E_Y...E_{x-1}E_x' ...E_1')$ bekannt.

16) $REC_\nu$ wird hergestellt.

17-18) $\nu$ wird so lange erhöht, bis alle Zähler und Nenner-Summanden der Glg. 4 berücksichtigt sind.

19-20) Ist das berechnete $\frac{\Delta R}{R}$ kleiner als der zuvor gültige Wert, so wird der Vorzeichenwechsel rückgängig gemacht.

21) Ist der berechnete $\frac{\Delta R}{R}$ größer als der zuvor gültige Wert, so besteht der Vorzeichenwechsel zu Recht und das jetzt ermittelte $\frac{\Delta R}{R}$ ist der derzeit größte Wert.

22-23) Die Zählvariable der Fehlervorzeichen wird so lange erhöht, bis alle noch nicht endgültig festgelegten Vorzeichen berücksichtigt sind

24) Die Variable ERGEBNIS enthält den größten $\frac{\Delta R}{R}$ -Wert, also den relativen Größtfehler.

Anhang 3

Definitionen und Beweise für die Gleichungen 3 und 4

Definition L-Operator:

a) Sei $p(...E_i...)$ eine beliebige Produktwahrscheinlichkeit, die an irgendeiner Stelle ein beliebiges, unnegiertes Ereignis $E_i$ enthält. Dann gilt für den Operator $\underset{E_i}{L}$ und den Operanden $p(...E_i...)$:

$$\underset{E_i}{L} \, p(...E_i...) = p(...E_i...) \cdot \frac{p(E_i \mid E_i')}{p(E_i)} + p(...\overline{E}_i...) \cdot \frac{p(\overline{E}_i \mid E_i')}{p(\overline{E}_i)} \cdot$$

b) Eine Operation ist undefiniert, falls das unter dem Operator stehende Ereignis im Operanden an irgendeiner Stelle negiert auftritt.

c) Ein Operand ist invariant, falls das unter dem Operator stehende Ereignis an keiner Stelle des Operanden vorkommt.

d) Ist der Operand eine beliebige Produktwahrscheinlichkeit oder ein Ausdruck, der durch mehrmalige Anwendung von L-Operatoren aus einer beliebigen Produktwahrscheinlichkeit entstanden ist, so gilt: Wird ein beliebiger Operator $\underset{E_i}{L}$ auf einen Operanden angewendet, so erhält man bei Nicht-Zutreffen von Ziffer b) und Ziffer c) das Ergebnis dadurch, daß man den Operanden mit

$$\frac{p\langle E_i \mid E_i'\rangle}{p\langle E_i\rangle}$$

multipliziert, dann zu dem so gebildeten Ausdruck denselben Ausdruck additiv hinzufügt und schließlich in dem additiv hinzugefügten Ausdruck alle $E_i$ negiert.

e) Das Produkt zweier Operatoren ist die Hintereinanderausführung dieser Operatoren.

f) (Definitionsbereich und Wertebereich) Der Definitionsbereich $D_L$ und der Wertebereich $W_L$ der L-Operatoren sind identisch.

$D_L$ und $W_L$ enthalten alle beliebigen, einzelnen Produktwahrscheinlichkeiten. Hinzu kommen alle Ausdrücke, die aus einer einzelnen Produktwahrscheinlichkeit bei Beachtung der Regeln a) bis e) durch wiederholte Anwendung beliebiger L-Operatoren gebildet werden können.

Bemerkungen:

1. Kann eine einzelne Produktwahrscheinlichkeit etwa infolge stochastischer Unabhängigkeiten in ein Produkt von Produktwahrscheinlichkeiten zerlegt werden, so zählt dieses Produkt nicht zum Definitionsbereich des Operators.

Beispiel:

Es gelte $p(E3\ E2\ E1) = p(E3)\bullet p(E2\ E1)$.

Die Anwendung von $\underset{E1}{L}$ auf $p(E3\ E2\ E1)$ ergibt:

$$\underset{E1}{L}\ p\langle E3\ E2\ E1\rangle = p\langle E3\ E2\ E1\rangle \cdot \frac{p\langle E1 \mid E1'\rangle}{p\langle E1\rangle} + p\langle E3\ E2\ \overline{E1}\rangle \cdot \frac{p\langle \overline{E1} \mid E1'\rangle}{p\langle \overline{E1}\rangle} \cdot$$

Die rechte Seite der obigen Gleichung ist ungleich

$$p\langle E3\rangle \cdot p\langle E2\ E1\rangle \cdot \frac{p\langle E1 \mid E1'\rangle}{p\langle E1\rangle} + p\langle E3\rangle \cdot p\langle E2\ \overline{E1}\rangle \cdot \frac{p\langle \overline{E1} \mid E1'\rangle}{p\langle \overline{E1}\rangle},$$

da im allgemeinen aus $p(E3\ E2\ \overline{E1}) = p(E3)\bullet p(E2\ E1)$ nicht $p(E3\ E2\ \overline{E1}) = p(E3)\bullet p(E2\ \overline{E1})$ folgt.

2. Die L-Operatoren sind kommutativ.

Sei

$$\underset{E_i \cdot E_k}{L}$$

die Schreibweise für das Produkt

$$\underset{E_i}{L}\ \underset{E_k}{L} \cdot$$

Für beliebige Ereignisse $E_i$ und $E_h$ gilt:

$$\mathop{L}_{E_i E_h} p(\ldots E_i \ldots E_h \ldots) = \mathop{L}_{E_h E_i} p(\ldots E_i \ldots E_h \ldots) \ .$$

Der Beweis dieser Aussage kann durch einfaches Ausschreiben der beiden Seiten der Gleichung erfolgen.

### L-Sätze

Als wesentliche Neuerung ist die nachfolgend formulierte Glg.3 anzusehen. Diese Gleichung erlaubt es erstmals, bei der Berechnung von Hypothesenwahrscheinlichkeiten beliebig viele unsichere Merkmale zu berücksichtigen.

Es sei $(E_k \ldots E_2 E_1')$ das zu verarbeitende Merkmalsprodukt, wobei das unsichere Merkmal $E_1'$ aus Gründen der Uebersichtlichkeit an das rechte Ende des Merkmalsprodukts gestellt wurde. Die sicheren Merkmale werden nicht-negiert angeschrieben; sie können jedoch beliebig durch ihre Negationen ersetzt werden.

Dann gilt:

#### Lemma

$$p(H_j \mid E_k \ldots E_2 E_1') = \mathop{L}_{E_1} \left[ p(H_j \mid E_k \ldots E_2 E_1) \right] \cdot p(E_1') \ .$$

#### Beweis:

$$\frac{p(H_j \mid E_k \ldots E_2 E_1')}{p(E_1')} = \frac{p(H_j \mid E_k \ldots E_2 E_1' E_1) + p(H_j \mid E_k \ldots E_2 E_1' \overline{E}_1)}{p(E_1')}$$

$$= \frac{p(H_j \mid E_k \ldots E_2 E_1' E_1)}{p(E_1')} \cdot \frac{p(E_1 E_1')}{p(E_1 E_1')}$$

$$+ \frac{p(H_j \mid E_k \ldots E_2 E_1' \overline{E}_1)}{p(E_1')} \cdot \frac{p(\overline{E}_1 E_1')}{p(\overline{E}_1 E_1')}$$

$$= p(H_j \mid E_k \ldots E_2 E_1' E_1 \mid E_1' E_1) \cdot p(E_1 \mid E_1')$$

$$+ p(H_j \mid E_k \ldots E_2 E_1' \overline{E}_1 \mid E_1' \overline{E}_1) \cdot p(\overline{E}_1 \mid E_1') \ .$$

Bei bereits bekanntem $E_i$ (wahr oder falsch) ergibt die Hinzunahme weiterer Informationen über $E_i$ keine Veränderung der Hypothesenwahrscheinlichkeit.

Also folgt:

$$\frac{p(H_j\ E_k\ldots E_2\ E_1^!)}{p(E_1^!)} = p(H_j\ E_k\ldots E_2\,E_1^!\,\bcancel{E_1}\,|E_1)\cdot p(E_1|E_1^!)$$

$$+ p(H_j\ E_k\ldots E_2\,E_1^!\,\bcancel{\overline{E}_1}\,|\overline{E}_1)\cdot p(\overline{E}_1|E_1^!)$$

$$= p(H_j\ E_k\ldots E_2\,E_1)\cdot\frac{p(E_1|E_1^!)}{p(E_1)}$$

$$+ p(H_j\ E_k\ldots E_2\,\overline{E}_1)\cdot\frac{p(\overline{E}_1|E_1^!)}{p(\overline{E}_1)}$$

$$= \underset{E_1}{L}\left[p(H_j\ E_k\ldots E_2\,E_1)\right]\cdot$$

$$p(H_j\ E_k\ldots E_2\,E_1^!) = \underset{E_1}{L}\left[p(H_j\ E_k\ldots E_2\,E_1)\right]\cdot p(E_1^!)\ ,\quad q.e.d.$$

Satz_ (L-Satz für ein einzelnes, unsicheres Merkmal)

$$p(H_j\,|E_k\ldots E_2\,E_1^!) = \frac{\underset{E_1}{L}\left[p(H_j\ E_k\ldots E_2\,E_1)\right]}{\underset{E_1}{L}\left[p(E_k\ldots E_2\,E_1)\right]}\ .$$

Beweis:

$$p(H_j\,|E_k\ldots E_2\,E_1^!) = \frac{p(H_j\ E_k\ldots E_2\,E_1^!)}{p(E_k\ldots E_2\,E_1^!)}$$

$$= \frac{\underset{E_1}{L}\left[p(H_j\ E_k\ldots E_2\,E_1)\right]\cdot p(E_1^!)}{\underset{E_1}{L}\left[p(E_k\ldots E_2\,E_1)\right]\cdot p(E_1^!)}\qquad (Lemma)$$

$$= \frac{\underset{E_1}{L}\left[p(H_j\ E_k\ldots E_2\,E_1)\right]}{\underset{E_1}{L}\left[p(E_k\ldots E_2\,E_1)\right]}\ ,\quad q.e.d.$$

Satz (L-Satz für beliebig viele unsichere Merkmale)

Völlig willkürlich seien $E_i',...,E_1'$ unsicher. Dann ist:

$$p(H_j | E_k...E_{i+1} E_i'...E_1') = \frac{\mathop{L}\limits_{E_i...E_1}\left[p(H_j\ E_k...E_{i+1} E_i...E_1)\right]}{\mathop{L}\limits_{E_i...E_1}\left[p(E_k...E_{i+1} E_i...E_1)\right]}.$$

Beweis:

$$p(H_j | E_k...E_{i+1} E_i'...E_1') = \frac{p(H_j\ E_k...E_{i+1} E_i'...E_1')}{p(E_k...E_{i+1} E_i'...E_1')}$$

$$= \frac{\mathop{L}\limits_{E_1}\left[p(H_j\ E_k...E_{i+1} E_i'...E_2' E_1)\right]}{\mathop{L}\limits_{E_1}\left[p(E_k...E_{i+1} E_i'...E_2' E_1)\right]}\quad\text{(Lemma)}$$

$$= \frac{\mathop{L}\limits_{E_2}\left[\mathop{L}\limits_{E_1}\left[p(H_j\ E_k...E_{i+1} E_i'...E_3' E_2 E_1)\right]\right]}{\mathop{L}\limits_{E_2}\left[\mathop{L}\limits_{E_1}\left[p(E_k...E_{i+1} E_i'...E_3' E_2 E_1)\right]\right]}$$

$$\vdots$$

$$= \frac{\mathop{L}\limits_{E_i}\left[...\mathop{L}\limits_{E_1}\left[p(H_j\ E_k...E_{i+1} E_i...E_1)\right]...\right]}{\mathop{L}\limits_{E_i}\left[...\mathop{L}\limits_{E_1}\left[p(E_k...E_{i+1} E_i...E_1)\right]...\right]}$$

$$= \frac{\mathop{L}\limits_{E_i...E_1}\left[p(H_j\ E_k...E_{i+1} E_i...E_1)\right]}{\mathop{L}\limits_{E_i...E_1}\left[p(E_k...E_{i+1} E_i...E_1)\right]}\quad,\ \text{q.e.d.}$$

[Glg. 3]

Da die L-Operatoren kommutativ sind, ist die "Abarbeitungsreihenfolge" der unsicheren Merkmale beliebig.

<u>Korollar</u>

$$p(H_j | E_k \ldots E_i' \ldots E_l) = p(H_j | E_k \ldots \cancel{E_i} \ldots E_l) \quad \text{für } p(E_i | E_i') = p(E_i).$$

Beweis:

$$p(H_j | E_k \ldots E_i' \ldots E_l) = \frac{\underset{E_i}{L} \left[ p(H_j E_k \ldots E_i \ldots E_l) \right]}{\underset{E_i}{L} \left[ p(E_k \ldots E_i \ldots E_l) \right]} \quad \text{(L-Satz)}$$

$$= \frac{p(H_j E_k \ldots E_i \ldots E_l) + p(H_j E_k \ldots \overline{E_i} \ldots E_l)}{p(E_k \ldots E_i \ldots E_l) + p(E_k \ldots \overline{E_i} \ldots E_l)}$$

$$= \frac{p(H_j E_k \ldots \cancel{E_i} \ldots E_l)}{p(E_k \ldots \cancel{E_i} \ldots E_l)}$$

$$= p(H_j | E_k \ldots \cancel{E_i} \ldots E_l) \quad , \quad \text{q.e.d.}$$

Steht eine Stichprobe der Gesamtpopulation zur Verfügung, so wird man Glg.3 verwenden. Andernfalls wird diese Gleichung so umgeformt, daß man mit Stichproben auf Subpopulationen mit Eigenschaft $H_\mu$ und den a-priori-Wahrscheinlichkeiten $p(H_\mu)$, $\mu = 1,\ldots,J$ auskommt. Dies wird für zwei unsichere Merkmale exemplarisch durchgeführt:

$$p(H_j \mid E_k \ldots E_3 E_2' E_1')$$

$$= \frac{L_{E_2 E_1}\left[ p(H_j E_k \ldots E_3 E_2 E_1) \right]}{L_{E_2 E_1}\left[ p(E_k \ldots E_3 E_2 E_1) \right]}$$

$$= \frac{p(H_j E_k \ldots E_3 E_2 E_1) \cdot \dfrac{p(E_2 \mid E_2')}{p(E_2)} \cdot \dfrac{p(E_1 \mid E_1')}{p(E_1)} + \ldots}{p(E_k \ldots E_3 E_2 E_1) \cdot \dfrac{p(E_2 \mid E_2')}{p(E_2)} \cdot \dfrac{p(E_1 \mid E_1')}{p(E_1)} +}$$

$$\frac{p(H_j E_k \ldots E_3 E_2 \overline{E_1}) \cdot \dfrac{p(E_2 \mid E_2')}{\cdot \, p(E_2)} \cdot \dfrac{p(\overline{E_1} \mid E_1')}{p(\overline{E_1})} + \ldots}{p(E_k \ldots E_3 E_2 \overline{E_1}) \cdot \dfrac{p(E_2 \mid E_2')}{p(E_2)} \cdot \dfrac{p(\overline{E_1} \mid E_1')}{p(\overline{E_1})} +}$$

$$\frac{p(H_j E_k \ldots E_3 \overline{E_2} E_1) \cdot \dfrac{p(\overline{E_2} \mid E_2')}{p(\overline{E_2})} \cdot \dfrac{p(E_1 \mid E_1')}{p(E_1)} + \ldots}{p(E_k \ldots E_3 \overline{E_2} E_1) \cdot \dfrac{p(\overline{E_2} \mid E_2')}{p(\overline{E_2})} \cdot \dfrac{p(E_1 \mid E_1')}{p(E_1)} +}$$

$$\frac{p(H_j E_k \ldots E_3 \overline{E_2} \, \overline{E_1}) \cdot \dfrac{p(\overline{E_2} \mid E_2')}{p(\overline{E_2})} \cdot \dfrac{p(\overline{E_1} \mid E_1')}{p(\overline{E_1})}}{p(E_k \ldots E_3 \overline{E_2} \, \overline{E_1}) \cdot \dfrac{p(\overline{E_2} \mid E_2')}{p(\overline{E_2})} \cdot \dfrac{p(\overline{E_1} \mid E_1')}{p(\overline{E_1})}} \cdot$$

Nun werden unter der Voraussetzung sich gegenseitig ausschließender $H_u$ folgende Ersetzungen vorgenommen:

$$p(H_j E_k \ldots E_1) \quad = \quad p(E_k \ldots E_1 | H_j) \cdot p(H_j) ,$$

$$p(E_k \ldots E_1) \quad = \quad \sum_{\mu=1}^{J} (p(E_k \ldots E_1 | H_\mu) \, p(H_\mu) ,$$

$$p(E_i) \quad = \quad \sum_{\mu=1}^{J} p(E_i | H_\mu) \cdot p(H_\mu) .$$

$$p(H_j | E_k \ldots E_3 E_2' E_1')$$

$$= \frac{p(E_k \ldots E_3 E_2 E_1 | H_j) \cdot p(H_j) \cdot \dfrac{p(E_2 | E_2')}{\sum_\mu p(E_2 | H_\mu) \cdot p(H_\mu)} \cdot \dfrac{p(E_1 | E_1')}{\sum_\mu p(E_1 | H_\mu) \cdot p(H_\mu)} + \cdots}{\sum_\mu \left( p(E_k \ldots E_3 E_2 E_1 | H_\mu) \cdot p(H_\mu) \right) \dfrac{p(E_2 | E_2')}{\sum_\mu p(E_2 | H_\mu) \cdot p(H_\mu)} \cdot \dfrac{p(E_1 | E_1')}{\sum_\mu p(E_1 | H_\mu) \cdot p(H_\mu)} + }$$

$$\cdots \frac{p(E_k \ldots E_3 E_2 \overline{E_1} | H_j) \cdot p(H_j) \cdot \dfrac{p(E_2 | E_2')}{\sum_\mu p(E_2 | H_\mu) \cdot p(H_\mu)} \cdot \dfrac{p(\overline{E_1} | E_1')}{\sum_\mu p(\overline{E_1} | H_\mu) \cdot p(H_\mu)} + }{\sum_\mu \left( p(E_k \ldots E_3 E_2 \overline{E_1} | H_\mu) \cdot p(H_\mu) \right) \dfrac{p(E_2 | E_2')}{\sum_\mu p(E_2 | H_\mu) \cdot p(H_\mu)} \cdot \dfrac{p(\overline{E_1} | E_1')}{\sum_\mu p(\overline{E_1} | H_\mu) \cdot p(H_\mu)} + } \cdots$$

$$\cdots \frac{p(E_k \ldots E_3 \overline{E_2} E_1 | H_j) \cdot p(H_j) \cdot \dfrac{p(\overline{E_2} | E_2')}{\sum_\mu p(\overline{E_2} | H_\mu) \cdot p(H_\mu)} \cdot \dfrac{p(E_1 | E_1')}{\sum_\mu p(E_1 | H_\mu) \cdot p(H_\mu)} + }{\sum_\mu \left( p(E_k \ldots E_3 \overline{E_2} E_1 | H_\mu) \cdot p(H_\mu) \right) \dfrac{p(\overline{E_2} | E_2')}{\sum_\mu p(\overline{E_2} | H_\mu) \cdot p(H_\mu)} \cdot \dfrac{p(E_1 | E_1')}{\sum_\mu p(E_1 | H_\mu) \cdot p(H_\mu)} + } \cdots$$

$$\cdots \frac{p(E_k \ldots E_3 \overline{E_2} \overline{E_1} | H_j) \cdot p(H_j) \cdot \dfrac{p(\overline{E_2} | E_2')}{\sum_\mu p(\overline{E_2} | H_\mu) \cdot p(H_\mu)} \cdot \dfrac{p(\overline{E_1} | E_1')}{\sum_\mu p(\overline{E_1} | H_\mu) \cdot p(H_\mu)} }{\sum_\mu \left( p(E_k \ldots E_3 \overline{E_2} \overline{E_1} | H_\mu) \cdot p(H_\mu) \right) \dfrac{p(\overline{E_2} | E_2')}{\sum_\mu p(\overline{E_2} | H_\mu) \cdot p(H_\mu)} \cdot \dfrac{p(\overline{E_1} | E_1')}{\sum_\mu p(\overline{E_1} | H_\mu) \cdot p(H_\mu)} } \cdot$$

$$(\text{Glg. } 4)$$

Dieses liefert also eine Umformung des L-Satzes für die ausschließliche Verwendung bedingter Wahrscheinlichkeiten, wobei mit Ausnahme der a-priori-Wahrscheinlichkeiten $p(H_\mu)$ alle benötigten Wahrscheinlichkeitswerte aus Stichproben von Subpopulationen mit Eigenschaft $H_\mu$, $\mu = 1 \ldots J$ gewonnen werden können.

Anhang 4

Herleitung der Gleichungen 9 bis 13

Es stellt sich die Frage, in welcher Weise für ein beliebiges Ereignisprodukt ($E_k$ ... E.) der Fehler $\Delta h$-($E_k$...E.) von den Fehlern $\Delta h(E_k)$,...,$\Delta h(E.)$ abhängt. (Bei der Untersuchung kann man sich auf $h(E_k...E.)$ beschränken, da für die bedingte relative Häufigkeit $h(E_k...E.$      $H_j)$ statt der Gesamtpopulation lediglich die Subpopulation mit Eigenschaft $H_j$ zugrunde gelegt wird.)

Es werde h(E2 E1) als Beispiel einer relativen Häufigkeit gewählt. Es wird dabei angenommen, daß die relativen Häufigkeiten der Merkmale E2 und E1 die absoluten Fehler $\Delta h(E1)$ und $\Delta h(E2)$ aufweisen. Gesucht ist die Abhängigkeit des absoluten Fehlers $\Delta h(E2\ E1)$ von $\Delta h(E1)$ und $\Delta h(E2)$.

Zur Veranschaulichung das Beispiel einer Stichprobe mit 20 Ausführungen, für die jeweils die Eigenschaften E2 und E1 bestimmt sind.

| 1 | 2 | 3 | 4 | 5 | 6 | 7 | 8 | 9 | 10 | 11 | 12 | 12 | 14 | 15 | 16 | 17 | 18 | 19 | 20 |
|---|---|---|---|---|---|---|---|---|----|----|----|----|----|----|----|----|----|----|----|
| E2 |  | E2 |  |  | E2 |  | E2 | E2 |  |  | E2 |  | E2 |  | E2 | E2 |  | E2 | E2 |
|  | E1 | E1 |  |  | E1 |  |  | E1 |  |  | E1 |  | E1 |  | E1 |  |  |  | E1 |

20 Ausführungen eines Zufallsexperiments mit sicher bestimmten Merkmalen.
Keine Eintragung bedeutet: Eigenschaft nicht vorhanden.

Muß im Beispiel der angenommen werden, daß die Eigenschaft E1 durch einen zufälligen Fehler um $\Delta n(E1)$ häufiger vorkommt, so ist zunächst nicht bekannt, für welche Fälle zusätzlich die Eigenschaft E1 vorzusehen ist. Da es sich aber bei der Ursache für $\Delta n(E1)$ um eine zufällige Ursache handelt, wird jeder der E1 enthaltenden Fälle in gleicher Weise berücksichtigt. Also nimmt n(E2 E1) um

$$\frac{h(E2\ \overline{E1})}{h(\overline{E1})} \cdot \Delta n(E1) \quad zu,$$

d.h.

$$h(E2\ E1) \longmapsto h(E2\ E1) + \frac{h(E2\ \overline{E1})}{h(\overline{E1})} \cdot \frac{\Delta n(E1)}{n} \cdot$$

Wenn n(E2 E1) um eine bestimmte Anzahl zunimmt, so wird n(E2 $\overline{E1}$ ) um dieselbe Anzahl abnehmen. Es gilt also insgesamt bei einer Zunahme von h(E1) um $\Delta h(E1)$ bei konstantem h(E2):

$$h(E2\ E1) \longmapsto h(E2\ E1) + \frac{h(E2\ \overline{E1})}{h(\overline{E1})} \cdot \frac{\Delta n(E1)}{n} \cdot$$

$$h(E2\ \overline{E1}) \longmapsto h(E2\ \overline{E1}) - \frac{h(E2\ \overline{E1})}{h(\overline{E1})} \cdot \frac{\Delta n(E1)}{n} \cdot$$

Bei einer Abnahme von h(E1) um $\Delta$h(E1) bei konstantem h(E2) gilt entsprechend:

$$h(E2\ E1) \longmapsto h(E2\ E1) + \frac{h(E2\ E1)}{h(E1)} \cdot \frac{(-\Delta n(E1))}{n}$$

$$h(E2\ \overline{E1}) \longmapsto h(E2\ \overline{E1}) - \frac{h(E2\ E1)}{h(E1)} \cdot \frac{(-\Delta n(E1))}{n}$$

Diese Verhältnisse lassen sich durch nachfolgende Skizzen verdeutlichen:

Änderung von h(E2 E1) bei einer Änderung von n(E1) bei konstantem n(E2).

K1 : Muß durch einen zufälligen Fehler $h(E1)_o$ um $\frac{\Delta n(E1)}{n}$ größer angenommen werden, so gilt

$$h(E2\ E1)_o \longmapsto h(E2\ E1)_o + \frac{h(E2\ \overline{E1})_o}{h(\overline{E1})_o} \cdot \frac{\Delta n(E1)}{n} \ .$$

K2 : Muß durch einen zufälligen Fehler $h(E1)_o$ um $\frac{\Delta n(E1)}{n}$ niedriger angenommen werden, so gilt

$$h(E2\ E1)_o \longmapsto h(E2\ E1)_o + \frac{h(E2\ E1)_o}{h(E1)_o} \cdot \frac{(-\Delta n(E1))}{n} \ .$$

I : Begrenzung für K1 und K2 wegen $h(E2\ E1) \leq h(E2)$

II : Begrenzung für K1 und K2 wegen $h(E2\ E1) \leq h(E1)$

III : Begrenzung für K1 und K2 wegen $h(E2\ \overline{E1}) \leq h(\overline{E1})$

$h(E2) = const.$

Änderung von $h(E2\ \overline{E1})$ bei einer Änderung von $n(E1)$ bei konstantem $n(E2)$.

K1 : Muß durch einen zufälligen Fehler $h(E1)_o$ um $\dfrac{\Delta\,n(E1)}{n}$ größer angenommen werden, so gilt

$$h(E2\ \overline{E1})_o \longmapsto h(E2\ \overline{E1})_o - \frac{h(E2\ \overline{E1})_o}{h(\overline{E1})_o} \cdot \frac{\Delta\,n(E1)}{n}\ .$$

K2 : Muß durch einen zufälligen Fehler $h(E1)_o$ um $\dfrac{\Delta\,n(E1)}{n}$ niedriger angenommen werden, so gilt

$$h(E2\ \overline{E1}) \longmapsto h(E2\ \overline{E1})_o - \frac{h(E2\ E1)_o}{h(E1)_o} \cdot \frac{(-\Delta\,n(E1))}{n}\ .$$

·I : Begrenzung für K1 und K2 wegen $h(E2\ \overline{E1}) \leq h(E2)$

II : Begrenzung für K1 und K2 wegen $h(E2\ E1) \leq h(E1)$

III : Begrenzung für K1 und K2 wegen $h(E2\ \overline{E1}) \leq h(\overline{E1})$

Ist $\langle$ h(E2 E1)$_o$     h(E1)$_o$ $\rangle$ bzw. (h(E2 $\overline{E1}$   )$_o$    h(E1)$_o$ $\rangle$ derjenige Punkt. in dessen Umgebung Änderungen betrachtet werden. so kann man schreiben:

$$\Delta h\langle E2\ E1\rangle = \frac{h\langle E2\ \overline{E1}\rangle_o}{h\langle\overline{E1}\rangle_o}\cdot\Delta h\langle E1\rangle$$

$$\Delta h\langle E2\ \overline{E1}\rangle = -\frac{h\langle E2\ \overline{E1}\rangle_o}{h\langle\overline{E1}\rangle_o}\cdot\Delta h\langle E1\rangle$$

$$\left.\begin{array}{l} n\langle E2\rangle\ const.,\\[6pt] \Delta h\langle E1\rangle \rangle 0\ ,\\[6pt] 0\langle\ \Delta h\langle E1\rangle \leq h\langle\overline{E1}\rangle. \end{array}\right.$$

$$\Delta h\langle E2\ E1\rangle = \frac{h\langle E2\ E1\rangle_o}{h\langle E1\rangle_o}\cdot\Delta h\langle E1\rangle$$

$$\Delta h\langle E2\ \overline{E1}\rangle = -\frac{h\langle E2\ E1\rangle_o}{h\langle E1\rangle_o}\cdot\Delta h\langle E1\rangle$$

$$\left.\begin{array}{l} n\langle E2\rangle\ const.,\\[6pt] \Delta h\langle E1\rangle \langle 0\ ,\\[6pt] 0\langle\ \big|\Delta h\langle E1\rangle\big| \leq h\langle E1\rangle. \end{array}\right.$$

Damit läßt sich eine Operatorschreibweise einführen. die wie folgt definiert wird:

$$\Delta h\langle E2\ E1\rangle = \left.\frac{\partial h\langle E2\ E1\rangle}{\partial h\langle E1\rangle}\right|_{\substack{h\langle E2\ E1\rangle_o\\ h\langle E1\rangle_o +}}\cdot\Delta h\langle E1\rangle\ ,$$

wobei gilt:

$$\left.\frac{\partial h\langle E2\ E1\rangle}{\partial h\langle E1\rangle}\right|_{\substack{h\langle E2\ E1\rangle_o\\ h\langle E1\rangle_o +}} := \frac{h\langle E2\ \overline{E1}\rangle_o}{h\langle\overline{E1}\rangle_o}\ ;\ h\langle E2\rangle = const.$$

$\left(\text{Hierbei bedeutet }\left|\begin{array}{l}h\langle E2\ E1\rangle_o\\ h\langle E1\rangle_o +\end{array}\right.\right.$ :    an der Stelle

$\left(h\langle E2\ E1\rangle_o\big| h\langle E1\rangle_o\right)$ in Richtung größerer h$\langle$E1$\rangle$-Werte. $\Big)$

$$\Delta h(E2\ \overline{E1}) = \left.\frac{\partial\, h(E2\ \overline{E1})}{h(E1)}\right|_{\substack{h(E2\ \overline{E1})_0 \\ h(E1)_0 +}} \cdot \Delta h(E1)\ ,$$

wobei gilt:

$$\left.\frac{\partial\, h(E2\ \overline{E1})}{\partial\, h(E1)}\right|_{\substack{h(E2\ \overline{E1})_0 \\ h(E1)_0 +}} := -\frac{h(E2\ \overline{E1})_0}{h(\overline{E1})_0}\ ; \quad h(E2) = \text{const.}$$

---

$$\Delta h(E2\ E1) = \left.\frac{\partial\, h(E2\ E1)}{\partial\, h(E1)}\right|_{\substack{h(E2\ E1)_0 \\ h(E1)_0 -}} \cdot \Delta h(E1),$$

wobei gilt:

$$\left.\frac{\partial\, h(E2\ E1)}{\partial\, h(E1)}\right|_{\substack{h(E2\ E1)_0 \\ h(E1)_0 -}} := \frac{h(E2\ E1)_0}{h(E1)_0}\ ; \quad h(E2) = \text{const.}$$

---

$$\Delta h(E2\ \overline{E1}) = \left.\frac{\partial\, h(E2\ \overline{E1})}{\partial\, h(E1)}\right|_{\substack{h(E2\ \overline{E1})_0 \\ h(E1)_0 -}} \cdot \Delta h(E1),$$

wobei gilt:

$$\left.\frac{\partial\, h(E2\ \overline{E1})}{\partial\, h(E1)}\right|_{\substack{h(E2\ \overline{E1})_0 \\ h(E1)_0 -}} := -\frac{h(E2\ E1)_0}{h(E1)_0}\ ; \quad h(E2) = \text{const.}$$

Da von vorneherein feststeht, an welcher Stelle die Änderungen untersucht werden, kann der Aufwand zur Angabe dieser Stelle reduziert werden. Zur Vereinfachung erfolgt nur noch eine Richtungsangabe ( rechts von $\partial h(E1)$ ). Dann bedeutet:

$\partial h(E1)$ : in Richtung größerer $h(E1)$-Werte,

$\partial h(E1)$ : in Richtung kleinerer $h(E1)$-Werte,

jeweils an der Stelle $\langle h(E2\ E1)_0 \quad h(E1)_0 \rangle$ bzw. $\langle h(E2\ \overline{E1}\ )_0 \quad h(E1)_0 \rangle$.

Außerdem wird auf der rechten Seite der obigen Definitionsgleichungen die Kennzeichnung ";" weggelassen. Mit dieser vereinfachten Schreibweise ergibt sich:

$$\frac{\partial\, h(E2\ E1)}{\partial\, h(E1)}\Bigg|_+ := \frac{h(E2\ \overline{E1})}{h(\overline{E1})}\,,$$

$$\frac{\partial\, h(E2\ \overline{E1})}{\partial\, h(E1)}\Bigg|_+ := -\,\frac{h(E2\ \overline{E1})}{h(\overline{E1})}\,,$$

$$\frac{\partial\, h(E2\ E1)}{\partial\, h(E1)}\Bigg|_- := \frac{h(E2\ E1)}{h(E1)}\,,$$

$$\frac{\partial\, h(E2\ \overline{E1})}{\partial\, h(E1)}\Bigg|_- := -\,\frac{h(E2\ E1)}{h(E1)}\,.$$

Für beliebig viele Merkmale $E_k,...,E_1$ lassen sich diese Zusammenhänge sofort allgemein angeben, da stets nur die relative Häufigkeit eines Merkmals bei Konstanz der jeweiligen relativen Häufigkeit der übrigen Merkmale verändert wird. Es ergibt sich somit für fehlerfrei angenommene, d.h. konstante $h(E_n)$, $E_n \neq E_i$ :

$$\frac{\partial\, h(E_k...E_i...E_1)}{\partial\, h(E_i)}\Bigg|_+ := \frac{h(E_k...\overline{E_i}...E_1)}{h(\overline{E_i})}\,,$$

$$\frac{\partial\, h(E_k...\overline{E_i}...E_1)}{\partial\, h(E_i)}\Bigg|_+ := -\,\frac{h(E_k...\overline{E_i}...E_1)}{h(\overline{E_i})}\,,$$

$$\frac{\partial\, h(E_k...E_i...E_1)}{\partial\, h(E_i)}\Bigg|_- := \frac{h(E_k...E_i...E_1)}{h(E_i)}\,,$$

$$\frac{\partial\, h(E_k...\overline{E_i}...E_1)}{\partial\, h(E_i)}\Bigg|_- := -\,\frac{h(E_k...E_i...E_1)}{p(E_i)}\,,$$

$$\frac{\partial\, h(E_k...\cancel{E_i}...E_1)}{\partial\, h(E_i)} := 0\,.$$

Anhang 5

Berechnung von $\dfrac{\partial R}{\partial h(E_i)_+}$ für $i \in \{1,..,X\}$

Für das erste unsichere Merkmal E1' der Glg. 14 gilt:

$$\frac{\partial Z}{\partial h(E1)_+} = \frac{h(H_j E3\ E2\ \overline{E1})}{h(\overline{E1})} \cdot \frac{h(E2|E2')}{h(E2)} \cdot \frac{h(E1|E1')}{h(E1)} + h(H_j E3\ E2\ E1) \cdot \frac{h(E2|E2')}{h(E2)} \cdot \frac{h(E1|E1')}{-(h(E1))^2}$$

$$- \frac{h(H_j E3\ E2\ \overline{E1})}{h(\overline{E1})} \cdot \frac{h(E2|E2')}{h(E2)} \cdot \frac{h(\overline{E1}|E1')}{h(\overline{E1})} + h(H_j E3\ E2\ \overline{E1}) \cdot \frac{h(E2|E2')}{h(E2)} \cdot \frac{h(\overline{E1}|E1')}{(h(\overline{E1}))^2}$$

$$+ \frac{h(H_j E3\ \overline{E2}\ \overline{E1})}{h(\overline{E1})} \cdot \frac{h(\overline{E2}|E2')}{h(\overline{E2})} \cdot \frac{h(E1|E1')}{h(E1)} + h(H_j E3\ \overline{E2}\ E1) \cdot \frac{h(\overline{E2}|E2')}{h(\overline{E2})} \cdot \frac{h(E1|E1')}{-(h(E1))^2}$$

$$- \frac{h(H_j E3\ \overline{E2}\ \overline{E1})}{h(\overline{E1})} \cdot \frac{h(\overline{E2}|E2')}{h(\overline{E2})} \cdot \frac{h(\overline{E1}|E1')}{h(\overline{E1})} + h(H_j E3\ \overline{E2}\ \overline{E1}) \cdot \frac{h(\overline{E2}|E2')}{h(\overline{E2})} \cdot \frac{h(\overline{E1}|E1')}{(h(\overline{E1}))^2}$$

Damit ergibt sich:

$$\frac{\partial R}{\partial h(E1)_+} = \frac{h(E2|E2')}{h(E2)} \cdot \frac{h(E1|E1')}{h(E1)} \left[ \frac{1}{N} \left( \frac{h(H_j E3\ E2\ \overline{E1})}{h(\overline{E1})} - \frac{h(H_j E3\ E2\ E1)}{h(E1)} \right) - \frac{Z}{N^2} \left( \right) \right]$$

$$- \frac{h(E2|E2')}{h(E2)} \cdot \frac{h(\overline{E1}|E1')}{h(\overline{E1})} \left[ \frac{1}{N} \left( \frac{h(H_j E3\ E2\ \overline{E1})}{h(\overline{E1})} - \frac{h(H_j E3\ E2\ \overline{E1})}{h(\overline{E1})} \right) - \frac{Z}{N^2} \left( \right) \right]$$

$$+ \frac{h(\overline{E2}|E2')}{h(\overline{E2})} \cdot \frac{h(E1|E1')}{h(E1)} \left[ \frac{1}{N} \left( \frac{h(H_j E3\ \overline{E2}\ \overline{E1})}{h(\overline{E1})} - \frac{h(H_j E3\ \overline{E2}\ E1)}{h(E1)} \right) - \frac{Z}{N^2} \left( \right) \right]$$

$$- \frac{h(\overline{E2}|E2')}{h(\overline{E2})} \cdot \frac{h(\overline{E1}|E1')}{h(\overline{E1})} \left[ \frac{1}{N} \left( \frac{h(H_j E3\ \overline{E2}\ \overline{E1})}{h(\overline{E1})} - \frac{h(H_j E3\ \overline{E2}\ \overline{E1})}{h(\overline{E1})} \right) - \frac{Z}{N^2} \left( \right) \right] \cdot$$

$$\underbrace{\qquad\qquad\qquad\qquad\qquad\qquad\qquad}_{S_\nu \left( \dfrac{\partial R}{\partial h(E1)_+} \right)} , \quad \nu = 0,..,3.$$

Hierbei bedeutet ():

Das Ereignis $H_j$ wird aus der direkt vorangehenden runden Klammer entfernt und der so veränderte Inhalt nach () übernommen.

Für den

$\nu$-ten Summanden von $\dfrac{\partial R}{\partial h(E1)_+}$ .

wurde die Bezeichnung

$$S_\nu\left(\frac{\partial R}{\partial h(E1)_+}\right)$$

gewählt. Abgekürzt gilt also:

$$\frac{\partial R}{\partial h(E1)_+} = S_0\left(\frac{\partial R}{\partial h(E1)_+}\right) + S_1\left(\frac{\partial R}{\partial h(E1)_+}\right) + S_2\left(\frac{\partial R}{\partial h(E1)_+}\right) + S_3\left(\frac{\partial R}{\partial h(E1)_+}\right) ,$$

wobei die

$$S_\nu\left(\frac{\partial R}{\partial h(E1)_+}\right), \quad \nu = 0,..,3$$

für die $(\nu + 1)$-ten Zeilen auf der rechten Seite der obigen Gleichung stehen.

Zur Verdeutlichung bestehender Gesetzmäßigkeiten wird die Berechnung für das zweite unsichere Merkmal E2' ebenfalls ausgeführt. Es gilt:

$$\frac{\partial Z}{\partial h(E2)_+} = \frac{h(H_j;E3\ \overline{E2}\ E1)}{h(\overline{E2})}\cdot\frac{h(E2|E2')}{h(E2)}\cdot\frac{h(E1|E1')}{h(E1)} + h(H_j;E3\ E2\ E1)\cdot\frac{h(E2|E2')}{-(h(E2))^2}\cdot\frac{h(E1|E1')}{h(E1)}$$

$$+ \frac{h(H_j;E3\ \overline{E2}\ \overline{E1})}{h(\overline{E2})}\cdot\frac{h(E2|E2')}{h(E2)}\cdot\frac{h(\overline{E1}|E1')}{h(\overline{E1})} + h(H_j;E3\ E2\ \overline{E1})\cdot\frac{h(E2|E2')}{-(h(E2))^2}\cdot\frac{h(\overline{E1}|E1')}{h(\overline{E1})}$$

$$- \frac{h(H_j;E3\ \overline{E2}\ E1)}{h(\overline{E2})}\cdot\frac{h(\overline{E2}|E2')}{h(\overline{E2})}\cdot\frac{h(E1|E1')}{h(E1)} + h(H_j;E3\ \overline{E2}\ E1)\cdot\frac{h(\overline{E2}|E2')}{(h(\overline{E2}))^2}\cdot\frac{h(E1|E1')}{h(E1)}$$

$$- \frac{h(H_j;E3\ \overline{E2}\ \overline{E1})}{h(\overline{E2})}\cdot\frac{h(\overline{E2}|E2')}{h(\overline{E2})}\cdot\frac{h(\overline{E1}|E1')}{h(\overline{E1})} + h(H_j;E3\ \overline{E2}\ \overline{E1})\cdot\frac{h(\overline{E2}|E2')}{(h(\overline{E2}))^2}\cdot\frac{h(\overline{E1}|E1')}{h(\overline{E1})}$$

$$\frac{\partial R}{\partial h\langle E2\rangle_+} = \frac{h\langle E2|E2'\rangle}{h\langle E2\rangle}\cdot\frac{h\langle E1|E1\rangle}{h\langle E1\rangle}\cdot\left[\frac{1}{N}\cdot\left(\frac{h\langle H_j E3\ \overline{E2}\ E1\rangle}{h\langle \overline{E2}\rangle} - \frac{h\langle H_j E3\ E2\ E1\rangle}{h\langle E2\rangle}\right) - \frac{Z}{N^2}\left(\ \right)\right]$$

$$+ \frac{h\langle E2|E2'\rangle}{h\langle E2\rangle}\cdot\frac{h\langle \overline{E1}|E1\rangle}{h\langle \overline{E1}\rangle}\cdot\left[\frac{1}{N}\cdot\left(\frac{h\langle H_j E3\ \overline{E2}\ \overline{E1}\rangle}{h\langle \overline{E2}\rangle} - \frac{h\langle H_j E3\ E2\ \overline{E1}\rangle}{h\langle E2\rangle}\right) - \frac{Z}{N^2}\left(\ \right)\right]$$

$$- \frac{h\langle \overline{E2}|E2'\rangle}{h\langle \overline{E2}\rangle}\cdot\frac{h\langle E1|E1\rangle}{h\langle E1\rangle}\cdot\left[\frac{1}{N}\cdot\left(\frac{h\langle H_j E3\ \overline{E2}\ E1\rangle}{h\langle \overline{E2}\rangle} - \frac{h\langle H_j E3\ \overline{E2}\ E1\rangle}{h\langle \overline{E2}\rangle}\right) - \frac{Z}{N^2}\left(\ \right)\right]$$

$$- \frac{h\langle \overline{E2}|E2'\rangle}{h\langle \overline{E2}\rangle}\cdot\frac{h\langle \overline{E1}|E1\rangle}{h\langle \overline{E1}\rangle}\cdot\left[\frac{1}{N}\cdot\left(\frac{h\langle H_j E3\ \overline{E2}\ \overline{E1}\rangle}{h\langle \overline{E2}\rangle} - \frac{h\langle H_j E3\ \overline{E2}\ \overline{E1}\rangle}{h\langle \overline{E2}\rangle}\right) - \frac{Z}{N^2}\left(\ \right)\right].$$

$$\underbrace{\phantom{xxxxxxxxxxxxxxxxxxxxxxxxxxxxxxxxxxxxxxxxxxxxxxxx}}$$

$$S_\nu\left(\frac{\partial R}{\partial h\langle E2\rangle_+}\right)\ ,\ \nu = 0,..,3.$$

Abgekürzt gilt:

$$\frac{\partial R}{\partial h\langle E2\rangle_+} = S_0\left(\frac{\partial R}{\partial h\langle E2\rangle_+}\right) + S_1\left(\frac{\partial R}{\partial h\langle E2\rangle_+}\right) + S_2\left(\frac{\partial R}{\partial h\langle E2\rangle_+}\right) + S_3\left(\frac{\partial R}{\partial h\langle E2\rangle_+}\right),$$

wobei die

$$S_\nu\left(\frac{\partial R}{\partial h\langle E2\rangle_+}\right), \nu = 0,..,3$$

für die $(\nu + 1)$-ten Zeilen auf der rechten Seite der obigen Gleichung stehen.

Es sei:

X        Anzahl unsicherer Merkmale, im Beispiel X := 2.

$\nu$        Zählindex mit $0 \leq \nu \leq 2^X -1$;

AKT        Aktuell zu verarbeitendes Merkmalsprodukt, im Beispiel: (E3 E2'E1').

$REC_\nu$        Rechnerisch benötigtes Merkmalsprodukt.

$REC_\nu$ entsteht aus AKT durch folgende Schritte:

1. Entfernung der Strichkennung,

2. Negieren von vormals unsicheren Merkmalen nach Maßgabe von $\nu$.

Dafür gilt:

Interpretiert man in $REC_\nu$ . $\nu = 0,...,3$ die Negierung eines ursprünglich unsicheren Merkmals als eine binäre 1 und die Nicht-Negierung als eine binäre 0, so liefern die ursprünglich unsicheren Merkmale eine binäre Zahl, deren Wert gleich $\nu$ ist.

Im Beispiel:

$\nu = 0 \Rightarrow REC_0 := (E3\ E2\ E1)$,

$\nu = 1 \Rightarrow REC_1 := (E3\ E2\ \overline{E1}\quad)$,

$\nu = 2 \Rightarrow REC_2 := (E3\quad \overline{E2}\quad E1)$,

$\nu = 3 \Rightarrow REC_3 := (E3\quad \overline{E2}\quad \overline{E1}\quad)$.

$RED_\nu$        Reduziertes Merkmalsprodukt; es entsteht aus $REC_\nu$ durch Entfernung von $E_i$ . wobei $E_i$ das Merkmal ist, das in

$$\frac{\partial R}{\partial h(E_i)}$$

im Nenner steht.

Y   Gesamtzahl zu verarbeitender Merkmale. im Beispiel: $Y := 3$.
Damit ergibt sich folgende Verallgemeinerung für

$$S_\nu\left(\frac{\partial R}{\partial h(E_i)_+}\right)$$

und beliebiges i, $i \leq X$ :

$$S_\nu\left(\frac{\partial R}{\partial h(E_i)_+}\right) := \begin{cases} 0, \text{ falls } E_i \text{ in } REC_\nu \text{ negiert,} \\[2ex] \overbrace{\frac{h(E_X | E_X')}{h(E_X)} \cdots \frac{h(E_1 | E_1')}{h(E_1)}}^{(REC)_\nu} \cdot \left[\frac{1}{N}\cdot\left(\frac{h(H_j\cdot RED_\nu\cdot\overline{E}_i)}{h(\overline{E}_i)} - \frac{h(H_j\cdot REC_\nu)}{h(E_i)}\right)\right. \\[3ex] \left. - \frac{Z}{N^2}\cdot\left(\frac{h(RED_\nu\cdot\overline{E}_i)}{h(\overline{E}_i)} - \frac{h(REC_\nu)}{h(E_i)}\right)\right] , \text{ sonst.} \end{cases}$$

Hierbei bedeutet

$$\overbrace{\phantom{(REC)}}^{(REC)_\nu},$$

daß unter dieser Klammer alle Merkmale zu negieren sind, die in $REC_\nu$ negiert sind.


## Ansprüche

Verfahren zu Ermittlung der Wahrscheinlichkeit des Vorliegens von Hypothesen $H_\mu$, $\mu = 1,...J$ anhand stochastisch abhängiger und teilweise unsicher bestimmter Merkmale, dadurch gekennzeichnet, daß für eine beliebige Hypothese $H_j$, $j \in \{1,...J\}$ und ein beliebiges Merkmalsprodukt $(E_Y...E_{X+1}E_X' ...E_1')$ mit X unsicheren Merkmalen und Y Merkmalen insgesamt, die vier Gleichungen

$$h(H_j \mid E_\gamma \ldots E_1) = \frac{h(H_j E_\gamma \ldots E_1)}{h(E_\gamma \ldots E_1)} \quad , \quad (\text{Glg.1}),$$

$$h(H_j \mid E_\gamma \ldots E_1) = \frac{h(E_\gamma \ldots E_1 \mid H_j)}{\sum_\mu h(E_\gamma \ldots E_1 \mid H_\mu) \cdot h(H_\mu)} \cdot h(H_j) \quad , \quad (\text{Glg.2}),$$

$$h(H_j \mid E_\gamma \ldots E_{\chi+1} E'_\chi \ldots E'_1) = \frac{L\left[h(H_j E_\gamma \ldots E_{\chi+1} E_\chi \ldots E_1)\right]}{L\left[h(E_\gamma \ldots E_{\chi+1} E_\chi \ldots E_1)\right]},$$

$$(\text{Glg.3}),$$

$$h(H_j \mid E_\gamma \ldots E_{\chi+1} E'_\chi \ldots E'_1) =$$

$$\frac{\sum_{\nu=0}^{\chi} \left[ h(\text{REC}_\nu \mid H_j) \cdot h(H_j) \cdot \frac{\overbrace{h(E_\chi \mid E'_\chi)}^{\langle \text{REC}_\nu \rangle}}{\sum_\mu h(E_\chi \mid H_\mu) \cdot h(H_\mu)} \cdot \ldots \cdot \frac{h(E_1 \mid E'_1)}{\sum_\mu h(E_1 \mid H_\mu) \cdot h(H_\mu)} \right]}{\sum_{\nu=0}^{\chi} \left[ \sum_\mu \left( h(\text{REC}_\nu \mid H_\mu) \cdot h(H_\mu) \right) \frac{h(E_\chi \mid E'_\chi)}{\sum_\mu h(E_\chi \mid H_\mu) \cdot h(H_\mu)} \cdot \ldots \cdot \frac{h(E_1 \mid E'_1)}{\sum_\mu h(E_1 \mid H_\mu) \cdot h(H_\mu)} \right]}$$

$$(\text{Glg.4}),$$

zur Verfügung stehen, wobei der Einsatz einer Gleichung in dem zurBerechnung verwendeten technischen Gerät von der Beschaffenheit des Merkmalsprodukts ($E_\gamma \ldots E_{\chi+1} E'_\chi \ldots E'_1$) und den zugrundegelegten Stichproben abhängt; das Verfahren ist als nächstes dadurch gekennzeichnet, daß die für Glg.1 und Glg.3 benötigten relativen Häufigkeiten aus einer Stichprobe der Gesamtpopulation gewonnen werden, und daß die für Glg.2 und Glg.4 benötigten relativen Häufigkeiten aus J Stichproben mit Eigenschaft $H_\mu$, $\mu = 1,\ldots,J$, sowie einer zusätzlichen Stichprobe zur Bestimmung der h($H_\mu$), $\mu = 1,\ldots,J$ zu berechnen sind, wobei eine einzelne Stichprobenausführung eine sicher bestimmte Hypothese $H_j$, $j \in \{1,\ldots,J\}$ enthält, sowie im allgemeinen unsichere Angaben über das Vorliegen bzw. Nicht-Vorliegen aller zu $H_j$ gehörenden Merkmale; das Verfahren ist weiter dadurch gekennzeichnet, daß im Massenspeicher des für die Berechnungen eingesetzten technischen Geräts oder Rechners drei Dateien angelegt sind, so daß

-die Datei 1 die jeweilige Menge der zugelassenen Hypothesen bzw. Merkmale, sowie für eine beliebige Hypothese Hj die zugeordnete, diese Hypothese charakterisierende Merkmalsmenge CHARMENG($H_j$) enthält,

-die Datei 2 aus einer Stichprobe der Gesamtpopulation oder aus J Stichproben der Subpopulationen mit Eigenschaft $H_\mu$, $\mu = 1,\ldots,J$ besteht,

-die Datei 3 die Menge der zugelassenen Belastungen, sowie für eine beliebige Belastung $B_k$ die zugeordnete, diese Belastung charakterisierende Merkmalsmenge CHARMENG($B_k$) umfaßt; eine Kennzeichnung des Verfahrens besteht weiterhin darin, daß für die Gleichungen 1 bis 4 nach bekannten Vorgehensweisen unter Verwendung eines Rechners eine Fehlerrechnung ermöglicht wird, wenn für eine Stichprobe der Gesamtpopulation mit $\xi = 1,\ldots,n$ Ausführungen und für beliebiges E, zusätzlich die Gleichnungen

$$h(E_i) = \frac{1}{n} \cdot \sum_{\xi=1}^{n} h(E_i | E_i')_\xi \quad ,$$

(Glg.5),

$$\left[\Delta h_u(E_i)\right]^2 \approx \frac{1}{n^2} \cdot \sum_{\xi=1}^{n} \left[\Delta h(E_i | E_i')_\xi\right]^2 \quad ,$$

(Glg.6),

$$\left[\Delta h_B(E_i)\right]^2 \approx \frac{1}{n} \cdot h(E_i) \cdot \left[1 - h(E_i)\right] \quad ,$$

(Glg.7),

$$\left[\Delta h(E_i)\right]^2 \approx \left[\Delta h_u(E_i)\right]^2 + \left[\Delta h_B(E_i)\right]^2 \quad ,$$

(Glg.8),

$$\frac{\partial h(E_\gamma \ldots E_i \ldots E_1)}{\partial h(E_i)_+} := \frac{h(E_\gamma \ldots \overline{E}_i \ldots E_1)}{h(\overline{E}_i)} \quad ,$$

(Glg.9),

$$\frac{\partial h(E_\gamma \ldots E_i \ldots E_1)}{\partial h(E_i)_-} := \frac{h(E_\gamma \ldots E_i \ldots E_1)}{h(E_i)} \quad ,$$

(Glg.10),

$$\frac{\partial h(E_\gamma \ldots \overline{E}_i \ldots E_1)}{\partial h(E_i)_+} := - \frac{h(E_\gamma \ldots \overline{E}_i \ldots E_1)}{h(\overline{E}_i)} \quad ,$$

(Glg.11),

$$\frac{\partial h(E_\gamma \ldots \overline{E}_i \ldots E_1)}{\partial h(E_i)_-} := - \frac{h(E_\gamma \ldots E_i \ldots E_1)}{h(E_i)} \quad ,$$

(Glg.12),

$$\frac{\partial h(E_\gamma \ldots E_i \ldots E_1)}{\partial h(E_i)_{+/-}} := 0 \quad ,$$

(Glg.13)

verwendet werden. und wenn für eine Stichprobe der Subpopulation mit Eigenschaft $H_i$ und $\xi = 1...n(H_i)$ Ausführungen für beliebiges $E_i$ zusätzlich die Gleichungen

$$h(E_i \,|\, H_j) \;=\; \frac{1}{n(H_j)} \cdot \sum_{\xi=1}^{n(H_j)} h(E_i \,|\, E_i')_\xi \;\;,$$

(Glg.5a),

$$\left[\Delta\, h_u(E_i \,|\, H_j)\right]^2 \;\approx\; \frac{1}{n(H_j)^2} \sum_{\xi=1}^{n(H_j)} \left[\Delta h(E_i \,|\, E_i')_\xi\right]^2 \;,$$

(Glg.6a),

$$\left[\Delta\, h_B(E_i \,|\, H_j)\right]^2 \;\approx\; \frac{1}{n(H_j)} \cdot h(E_i \,|\, H_j) \cdot \left[1 - h(E_i \,|\, H_j)\right] \;,$$

(Glg.7a),

$$\left[\Delta\, h(E_i \,|\, H_j)\right]^2 \;\approx\; \left[\Delta h_u(E_i \,|\, H_j)\right]^2 + \left[\Delta h_B(E_i \,|\, H_j)\right]^2 \;,$$

(Glg.8a),

$$\frac{\partial h(E_\gamma \ldots E_i \ldots E_1 \,|\, H_j)}{\partial h(E_i \,|\, H_j)_+} \;:=\; \frac{h(E_\gamma \ldots \overline{E}_i \ldots E_1 \,|\, H_j)}{h(\overline{E}_i \,|\, H_j)} \;,$$

(Glg.9a),

$$\frac{\partial h(E_\gamma \ldots E_i \ldots E_1 \,|\, H_j)}{\partial h(E_i \,|\, H_j)_-} \;:=\; \frac{h(E_\gamma \ldots E_i \ldots E_1 \,|\, H_j)}{h(E_i \,|\, H_j)} \;,$$

(Glg.10a),

$$\frac{\partial h(E_\gamma \ldots \overline{E}_i \ldots E_1 \,|\, H_j)}{\partial h(E_i \,|\, H_j)_+} \;:=\; -\,\frac{h(E_\gamma \ldots \overline{E}_i \ldots E_1 \,|\, H_j)}{h(\overline{E}_i \,|\, H_j)} \;,$$

(Glg.11a),

$$\frac{\partial h(E_\gamma \ldots \overline{E}_i \ldots E_1 \,|\, H_j)}{\partial h(E_i \,|\, H_j)_-} \;:=\; -\,\frac{h(E_\gamma \ldots E_i \ldots E_1 \,|\, H_j)}{h(E_i \,|\, H_j)} \;,$$

(Glg.12a),

$$\frac{\partial h(E_\gamma \ldots E_i \ldots E_1 | H_j)}{\partial h(E_i | H_j) + / -} := 0 \, ,$$

(Glg. 13a),

eingesetzt werden:

die abschließende Kennzeichnung des Verfahrens besteht darin, daß aus der zur Verarbeitung vorliegenden Merkmalsmenge VERMENG in fünf Schritten eine Teilmenge $T_{best}$ so bestimmt wird, daß mit dem daraus gebildeten Merkmalsprodukt $\pi$ ($T_{best}$) die beste Hypothese $H_{best}$ ermittelt werden kann, indem man

-in Schritt 1 die Menge {h($H_\mu$    $\pi$(AUFMENG($H_\mu$))    $\mu$ = 1,...J} berechnet und dann die Indizes der chancenreichsten Hypothesen in einer Indexmenge IND zusammenfaßt. wobei AUFMENG($H_j$) die Menge der für $H_j$ aufwertend wirkenden Merkmale aus VERMENG ist.

-in Schritt 2 die Paare gleichzeitig erlaubter Hypothesen durch die Nutzung der Voraussetzung ermittelt, daß die jeweils aufwertenden Merkmalsmengen zweier gleichzeitig bestehender Hypothesen einen Durchschnitt mit nur wenigen Elementen besitzen, und daß ein solches Element höchstens für eine dieser Hypothesen deutlich aufwertend wirkt.

-in Schritt 3 aus VERMENG alle möglichen Teilmengen herstellt und für alle diese Teilmengen die Mengen {h($H_\mu$    $\pi$($T_l$))    $\mu \epsilon$ IND} berechnet, wobei $T_l$ eine beliebige Teimenge bezeichnet.

-in Schritt 4 aus DISPOS := (VERMENG abzüglich der belastungsbedingten und möglicherweise nur merkmalsähnlichen Elemente) alle möglichen Teilmengen herstellt und für alle diese Teilmengen die Mengen {h($H_\mu$    $\pi$($T_l$))    $\mu \epsilon$ IND} berechnet, wobei $T_l$ wiederum eine beliebige Teilmenge bezeichnet.

-in Schritt 5 sukzessive VERMENG in DISPOS und DISPOS in VERMENG überführt, für die so veränderten Mengen nach jeder Veränderung die jeweilig zugehörigen Mengen der Form {h($H_\mu$    $\pi$($T_l$)) $\mu \epsilon$ IND} berechnet, und schließlich $T_{best}$ -und h($H_{best}$) als den besten Wert aus {h($H_\mu$    $\pi$($T_{best}$)- ) $\mu \epsilon$ IND} - mittels folgender Bestimmungskriterien auswählt:

a) max {h($H_\mu$    $\pi$($T_{best}$))    $\mu \epsilon$ IND} erreicht mindestens einen Wert in der Nähe der Spitzenwerte konkurrierender Mengen,

b) in {h($H_\mu$    $\pi$($T_{best}$))    $\mu \epsilon$ IND} besitzen der höchste und der zweithöchste Wert einen größeren Abstand als bei konkurrierenden Mengen,

c) die Fehler der Spitzenwerte konkurrierender Mengen sind ungefähr gleich groß,

d) die Elemente von VERMENG\$T_{best}$ können zufriedenstellend durch andere Ursachen als $H_{best}$ erklärt werden.

2) Anwendung des Verfahrens nach Anspruch 1 zur Ermittlung pathophysiologischer Zustände bei Menschen, Tieren und Pflanzen.

3) Anwendung des Verfahrens nach Anspruch 1 zur Ermittlung von Fehlern bei elektrischen und elektronischen Geräten, Motoren, Triebwerken, industriellen Anlagen.

4) Anwendung des Verfahrens nach Anspruch 1 zur hypothetischen Bestimmung von geologischen Formationen anhand von Meßwerten und Beobachtungen.

5) Anwendung des Verfahrens nach Anspruch 1 zur Eignungs-und Leistungsprognose bei beruflichen und sportlichen Betätigungen.

B) Erläuterungen zu den in den Patentansprüchen benutzten Begriffen:

1) Das Symbol h bezeichnet relative Häufigkeiten. die anhand von Stichproben ermittelt werden.
2) Für Glg.3 wird zur Erläuterung ein Beispiel angegeben.

Beispiel:

$$
h(H_j | E3\ E2'E1') = \cfrac{h(H_j; E3\ E2\ E1)\cdot \cfrac{h(E2|E2')}{h(E2)}\cdot\cfrac{h(E1|E1')}{h(E1)} + ---}{h(E3\ E2\ E1)\cdot \cfrac{h(E2|E2')}{h(E2)}\cdot\cfrac{h(E1|E1')}{h(E1)} + ---}
$$

$$
\cfrac{h(H_j; E3\ E2\ \overline{E1})\cdot\cfrac{h(E2|E2')}{h(E2)}\cdot\cfrac{h(\overline{E1}|E1')}{h(\overline{E1})} + ---}{h(E3\ E2\ \overline{E1})\cdot\cfrac{h(E2|E2')}{h(E2)}\cdot\cfrac{h(\overline{E1}|E1')}{h(\overline{E1})} + ---}
$$

$$
\cfrac{h(H_j; E3\ \overline{E2}\ E1)\cdot\cfrac{h(\overline{E2}|E2')}{h(\overline{E2})}\cdot\cfrac{h(E1|E1')}{h(E1)} + ---}{h(E3\ \overline{E2}\ E1)\cdot\cfrac{h(\overline{E2}|E2')}{h(\overline{E2})}\cdot\cfrac{h(E1|E1')}{h(E1)} + ---}
$$

$$
\cfrac{h(H_j; E3\ \overline{E2}\ \overline{E1})\cdot\cfrac{h(\overline{E2}|E2')}{h(\overline{E2})}\cdot\cfrac{h(\overline{E1}|E1')}{h(\overline{E1})}}{h(E3\ \overline{E2}\ \overline{E1})\cdot\cfrac{h(\overline{E2}|E2')}{h(\overline{E2})}\cdot\cfrac{h(\overline{E1}|E1')}{h(\overline{E1})}} \quad ,
$$

(Glg.14).

L ist ein Operator. der zur Abkürzung dieser umfangreichen Gleichungen eingeführt wurde.
3) In Glg.4 ist

$REC_\nu$ : Rechnerisch benötigtes Merkmalsprodukt. $REC_\nu$ entsteht aus dem Bedingungsprodukt auf der linken Seite der Glg.4 durch folgende Schritte:

1. Entfernung der Strichkennung.
2. Negieren von vormals unsicheren Merkmalen nach Maßgabe von $\nu$.

Dafür gilt: Interpretiert man in $REC_\nu$, $\nu = 0....2^X{-}1$ die Negierung eines ursprünglich unsicheren Merkmals als eine binäre 1 und die Nicht-Negierung als eine binäre 0. so liefern die ursprünglich unsicheren Merkmale eine binäre Zahl. deren Wert gleich $\nu$ ist.

Beispiel:

(E3 E2'E1') sei das Bedingungsprodukt auf der linken Seite von Glg.4. Dann gilt:

$\nu = 0 \Rightarrow REC_0 := (E3\ E2\ E1)$

$$\nu = 1 \Rightarrow REC. := (E3\ E2\ \overline{E1})$$
$$\nu = 2 \Rightarrow REC_2 := (E3\ \overline{E2}\ \ E1)$$
$$\nu = 3 \Rightarrow REC_3 := (E3\ \overline{E2}\ \ \overline{E1}\ ).$$

$$\boxed{-(REC_\nu)-}\ :$$

Unterhalb dieser Klammer besitzen alle Merkmale denselben Negierungsstatus wie in $REC_\nu$.

4) Als Beispiel einer Gesamtpopulation kann definiert werden:

Alle im Jahr 1977 in einer Reparaturwerkstatt der Bundesrepublik angelieferten Geräte mit dem Teilekennzeichen VW 1200 und dem Baujahr 1967.

Als Beispiel einer Supopulation mit Eigenschaft $H_j$, $H_j :=$ Kolbenring gebrochen, erhält man dann:

Alle im Jahr 1977 in einer Reparaturwerkstatt der Bundesrepublik angelieferten Geräte mit dem Teilekennzeichen VW 1200 und dem Baujahr 1967. deren mit Sicherheit bestimmte Diagnose ein gebrochener Kolbenring war.

5) Die zu einer Hypothese $H_j$ "gehörenden" Merkmale werden in einer charakteristischen Merkmalsmenge CHARMENG($H_j$) zusammengefaßt. Definition:

$CHARMENG(H_j) :=$ Menge der Merkmale aus $\{E_\lambda\ \ \ \lambda = 1 .... I\}$

mit

$$h(E_i \mid H_j) - \Delta h(E_i \mid H_j) > h(\widetilde{E_i}) + \Delta h(\widetilde{E_i}),$$

wobei I die Gesamtzahl der zugelassenen Merkmale ist.

Hierbei ist $h(\widetilde{E_i})$ die relative Häufigkeit des Merkmals $E_i$ für eine Stichprobe. die aus einer Population fehlerfrei funktionierender Geräte oder Individuen entnommen wurden. ( Das Zeichen $\sim$ kennzeichnet eine Population störungsfreier Objekte. )

6) $h(E_i\ \ E_j^*\ )$ ist die aus einer Stichprobe ermittelte relative Häufigkeit von $E_i$, wobei nur die Stichprobenausführungen berücksichtigt werden. die die Eigenschaft $E_j^*$ besitzen. Hierdurch wird angegeben, mit welcher "Sicherheit" das Merkmal $E_i$ vorliegt.

$h(E_i\ \ E_j^*\ )_\xi$ Der Index $\xi$ zeigt an. daß in der Datei 2, die eine Sammlung bereits diag nostizierter Fälle darstellt, der $\xi$ -te Fall angesprochen ist: diese $\xi$ -te Ausführung besitzt das Merkmal $E_i$ "mit der Sicherheit" $h(E_i\ \ E_j^*\ )_\xi$ .

7) $\Delta h(E_i)$ ist der absolute Fehler von $h(E_i)$. Er setzt sich nach Glg.8 zusammen aus dem Fehler $\Delta h_U(E_i)$, herrührend von der Unsicherheit bei der Bestimmung von $E_i$, und dem Fehler $\Delta h_B(E_i)$, herrührend von einer ungenügend hohen Anzahl von (Bernoulli-) Ausführungen.

8)

$$\frac{\partial\ h(E_\gamma ... E_i ... E_1)}{\partial h(E_i)} +$$

ist die abgekürzte Schreibweise für

$$\left. \frac{\partial h(E_\gamma ... E_i ... E_1)}{\partial h(E_i)} \right|_{(\ h(E_\gamma ... E_i ... E_1)_o\ |\ h(E_i)_o\ ),}$$

in Richtung zunehmender $h(E_i)$.

und meint:

Durch die zugrundeliegende Stichprobe ist in einem $h(E_\gamma ... E_i ... E_1) - h(E_i)$ - Diagramm der Punkt $(h(E_\gamma ... E_i ... E_1)_o\ \ h(E_i)_o)$ festgelegt. In einer Umgebung dieses Punktes wird bei festen $h(E_\lambda)$, $E_\lambda \neq E_i$ die

Abweichung von h(E,) ermittelt, wobei in Richtung zunehmender h(E,) vorgegangen wird.

Völlig analoge Verhältnisse ergeben sich für Negierungen im Zähler oder für abnehmendes h(E,); eine Streichung bedeutet: Merkmal nicht vorhanden.

9) Für eine Merkmalsmenge T bedeutet $\pi(T)$ das Produkt aller Merkmale. Beispiel: $T := \{a.b\}$; $\pi(T) = (a,b)$.

10) Für ein Merkmal $E_i \epsilon$ CHARMENG(Hj), das für $H_j$ aufwertend wirkt, gilt:

$$\frac{h(E_i|H_j)}{h(E_i)} > 1$$

11) Ein Merkmal $E_i$ kann belastungsbedingt sein, wenn $E_i \epsilon$ CHARMENG$(B)_k$) gilt, für eine beliebige Belastung $B_k$. Hierzu wird definiert:

CHARMENG$(B_k)$ := Menge der Merkmale $E_i$ aus

$\{E_\lambda \quad \lambda = 1....l\}$ mit

$$h(E_i|B_k) - \Delta h(E_i|B_k) > \widetilde{h(E_i)} + \widetilde{\Delta h(E_i)}.$$

12) Die Menge DISPOS kann wie folgt definiert werden:

DISPOS := (VERMENG\ZMENG)\($\bigcup_{\mathcal{H}}$ CHARMENG$(B_{\mathcal{H}})$),

wobei $B_{\mathcal{H}}$ eine als vorhanden eingestufte Belastung ist, und wobei ZMENG die Menge der Elemente von VERMENG ist, für die Zweifel bestehen, daß es sich um gültige Merkmale handelt, und nicht um lediglich merkmalsähnliche Beobachtungen.